# EUROPÄISCHE PATENTSCHRIFT

(11) **EP 3 839 328 B1**
(45) Veröffentlichungstag und Bekanntmachung des Hinweises auf die Patenterteilung: **12.10.2022**
(21) Anmeldenummer: 19217584.2
(22) Anmeldetag: 18.12.2019
(51) Int. Cl.: F21S 43/14, F21S 43/145, F21S 43/237, F21S 43/245, F21S 43/249, F21S 43/20, F21S 43/31, F21S 43/40, B60Q 1/30, F21S 43/16, F21S 43/50

(54) **LEUCHTMITTEL MIT RÜCKSTRAHLER-LICHTFUNKTION-KOMBINATION SOWIE HIERMIT AUSGESTATTETE FAHRZEUGLEUCHTE**
LIGHTING MEANS COMBINING RETRO-REFLECTOR AND LIGHT FUNCTION AND A VEHICLE LIGHT PROVIDED WITH SAME
MOYEN D'ÉCLAIRAGE POURVU DE COMBINAISON DE FONCTION D'ÉCLAIRAGE ET DE RÉTRORÉFLECTEUR AINSI QUE LAMPE POUR VÉHICULE ÉQUIPÉE D'UN TEL MOYEN D'ÉCLAIRAGE

(43) Veröffentlichungstag der Anmeldung: 23.06.2021
(73) Patentinhaber: odelo GmbH, 70329 Stuttgart (DE)
(72) Erfinder: HORNUNG, Thorsten, 73760 Ostfildern (DE)
(74) Vertreter: Benninger, Johannes

(56) Entgegenhaltungen:
- EP-A1- 2 979 924
- EP-A1- 3 355 664
- DE-A1-102009 035 165
- DE-A1-102010 015 298
- DE-A1-102011 081 919
- DE-A1-102016 114 246
- DE-T2- 69 319 998
- DE-U1-202017 103 322
- DE-U1-202018 105 831

## Beschreibung

Die Erfindung betrifft ein Leuchtmittel mit einer Rückstrahler-Lichtfunktion-Kombination gemäß dem Oberbegriff des Anspruchs 1 sowie eine mit einem solchen Leuchtmittel ausgestattete Fahrzeugleuchte gemäß dem Oberbegriff des Anspruchs 7.

Insbesondere beschäftigt sich die Erfindung mit einer raumsparenden Kombination eines Rückstrahlers mit einer Lichtfunktion einer Heckleuchte für ein Kraftfahrzeug.

Zur Sichtbarmachung von am Straßenverkehr teilnehmenden oder zur Teilnahme am Straßenverkehr vorgesehenen Fahrzeugen bei Nacht sind am Fahrzeug angeordnete Fahrzeugleuchten bekannt, welche jeweils eine oder mehrere bei der Teilnahme am Straßenverkehr gesetzlich vorgeschriebene Lichtfunktionen zu erfüllen in der Lage sind.

Eine solche Fahrzeugleuchte umfasst beispielsweise einen im Wesentlichen von einem Leuchtengehäuse und einer Lichtscheibe umschlossenen Leuchteninnenraum und mindestens ein darin beherbergtes, mindestens eine Lichtquelle umfassendes Leuchtmittel für wenigstens eine Lichtfunktion der Fahrzeugleuchte.

Jede Fahrzeugleuchte erfüllt je nach Ausgestaltung eine oder mehrere Aufgaben bzw. Funktionen. Zur Erfüllung jeder Aufgabe bzw. Funktion ist eine Lichtfunktion der Fahrzeugleuchte vorgesehen. Lichtfunktionen sind beispielsweise bei einer Ausgestaltung als Scheinwerfer eine die Fahrbahn ausleuchtende Funktion, oder bei einer Ausgestaltung als Signalleuchte eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer Schluss- oder Rücklichtfunktion, zur Sicherstellung einer Sichtbarkeit des Fahrzeugs bei Tag und/oder Nacht, wie etwa bei einer Ausgestaltung als Heckleuchte oder Tagfahrleuchte.

Jede Lichtfunktion muss dabei eine beispielsweise gesetzlich vorgegebene Lichtverteilung erfüllen. Die Lichtverteilung legt dabei mindestens einzuhaltende, umgangssprachlich als Helligkeit bezeichnete Lichtströme in zumindest einzuhaltenden Raumwinkelbereichen fest.

Für die einzelnen Lichtfunktionen sind zum Teil unterschiedliche Helligkeiten bzw. Sichtweiten sowie zum Teil unterschiedliche Lichtfarben zugeordnet.

Beispiele für Fahrzeugleuchten sind am Fahrzeugbug, an den Fahrzeugflanken und/oder an den Seitenspiegeln sowie am Fahrzeugheck angeordnete Wiederholblinkleuchten, beispielsweise zur Fahrtrichtungsanzeige, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central High-Mounted Braking Lights oder Central High Mounted Stop Lamps, Tagfahrleuchten, Scheinwerfer und auch als Abbiege- oder Kurvenlicht verwendete Nebelscheinwerfer, sowie Kombinationen hiervon.

Eine solche Kombination ist beispielsweise regelmäßig in den bekannten Heckleuchten verwirklicht. In diesen kommen beispielsweise Wiederholblinkleuchten, Begrenzungsleuchten, Bremsleuchten, Nebelleuchten sowie Rückfahrleuchten zum Einsatz, um nur eine von vielen in Heckleuchten verwirklichten Kombinationen zu nennen. Weder erhebt diese Aufzählung Anspruch auf Vollständigkeit, noch bedeutet dies, dass in einer Heckleuchte alle genannten Leuchten kombiniert werden müssen. So können beispielsweise auch nur zwei oder drei der genannten oder auch anderer Leuchten in einem gemeinsamen Leuchtengehäuse einer Heckleuchte miteinander kombiniert sein.

Um auch bei abgestelltem, am ruhenden Verkehr teilnehmendem Fahrzeug dieses für andere Verkehrsteilnehmer bei Nacht besser erkennbar zu machen sind Rückstrahler und/oder retroreflektierende Reflektoren - kurz Retro-Reflektoren - bekannt.

Das Prinzip von Rückstrahlern basiert auf der Retroreflexion von Licht. Dies kann bei Spiegeln mittels einer einseitigen Bedampfung erreicht werden. Insbesondere aus Effizienz- und Kostengründen wird häufig auf das Prinzip der Totalreflexion zurückgegriffen, da hierbei keine einseitige Bedampfung erforderlich ist. Grundsätzlich sind aber auch Systeme mit einer Verspiegelung umsetzbar.

Ein Rückstrahler oder Retro-Reflektor ist vereinfacht beschrieben ein Spiegel, der das auf ihn einfallende Licht in entgegengesetzter Richtung zurücksendet. Rückstrahler oder Retro-Reflektoren können beispielsweise durch Tripelspiegel oder Prismensysteme verwirklicht sein.

Zur Verbesserung der Erkennung von am Straßenverkehr, insbesondere am ruhenden Straßenverkehr teilnehmenden Fahrzeugen bei Nacht sind Rückstrahler gesetzlich vorgeschrieben.

Aktuell sind Rückstrahler an bestimmten Stellen am Fahrzeug vorgeschrieben. Bei Fahrzeuganhängern und auch Fahrrädern sind sie zwingend und dienen der Erhöhung der Sicherheit. Bei Automobilen sind nach hinten gerichtete Rückstrahler zwingend, zur Seite gerichtete nur in einigen Ländern zwingend und nach vorne gerichtete Rückstrahler nicht zwingend vorgeschrieben. Letztere können aber beispielsweise im Geltungsbereich der ECE-Regelungen angebracht werden und so auch in dieser momentan eher unüblichen Richtung die Sicherheit erhöhen.

Rückstrahler bestehen meist aus Kunststoff, wie beispielsweise PMMA (Polymethylmethacrylat), seltener aber auch aus Glas. Oftmals tragen sie rückseitig angeformte Tripelprismen, die durch Totalreflexion wie Tripelspiegel funktionieren. Sie sind hinten abgedeckt, um Reflexionsverluste durch Schmutz und Feuchtigkeit, wie etwa Kondenswasser, zu vermeiden. Weiterhin gibt es auch Reflektorfolien mit beispielsweise direkt verspiegelten, offen liegenden Glaskugeln. Auch Kombinationen der genannten Systeme finden sich nach dem Stand der Technik.

Für die Funktionsweise von Retroreflektoren/Rückstrahler kann beispielsweise folgende Zusammenfassung herangezogen werden, auf die an dieser Stelle daher nicht näher eingegangen wird: http://de.wikipedia.org/wiki/Retroreflektor.

Für die Funktionsweise von Reflektorfolien kann beispielsweise folgende Zusammenfassung herangezogen werden, auf die an dieser Stelle daher nicht näher eingegangen wird: http://de.wikipedia.org/wiki/Reflektorfolie.

Konventionellen Rückstrahler, wie sie durch die voranstehend beispielhaft und nicht abschließend beschriebenen Spiegel- und/oder Prismensysteme und/oder Reflektorfolien verwirklicht sein können, können in eine Fahrzeugleuchte integriert sein, beispielsweise durch Anordnung in oder auf einem ansonsten keiner Lichtfunktion zur Verfügung stehenden Bereich der Lichtscheibe.

Beispielsweise kann eine in Spritzgusstechnik hergestellte Lichtscheibe in einem solchen ansonsten keiner Lichtfunktion zur Verfügung stehenden Bereich an ihrer dem Leuchteninnenraum zugewandten Innenseite zur Verwirklichung eines Rückstrahlers mit einem Spiegel- und/oder Prismensystem versehen sein.

Dekorative Leuchten und die durch von den an einem Fahrzeug verbauten Fahrzeugleuchten verwirklichten Lichtfunktionen gebildete Signalbeleuchtung an und in Fahrzeugen sind oft ein wesentliches Gestaltungsmerkmal. Dementsprechend liegt großes Augenmerk auf der Formgebung dieser Leuchten.

Ein aktueller Trend für Fahrzeugleuchten ist, dass diese zunehmend schmaler werden. Sowohl aus ästhetischen Gründen, als auch um Heckleuchten schmaler gestalten zu können, werden die gesetzlich geforderten Rückstrahler oft getrennt von den Heckleuchten im Stoßfänger des Fahrzeugs verbaut. Teilweise sind sie dabei mit einem Nebelschlusslicht und/oder Rückfahrscheinwerfer kombiniert. Durch die Verlagerung der Rückstrahler in ein separates Bauteil wird für diese kein zusätzlicher Bauraum in der Heckleuchte benötigt. Gesetzlich ist zwar der Ineinanderbau eines Rückstrahlers mit einem Schlusslicht, einem Bremslicht oder einem Nebelschlusslicht zulässig, nach dem Stand der Technik ist dies jedoch lichttechnisch nicht in derselben Fläche umsetzbar. In die Richtung, in die der Rückstrahler wirksam ist, kann dieser nicht von einer dahinterliegenden Lichtquelle durchstrahlt werden. Nach dem Prinzip der Umkehrbarkeit des Lichtwegs müsste dazu von außen einfallendes Licht ebenfalls den Rückstrahler durchdringen können, und würde dementsprechend entgegen dem Zweck eines Rückstrahlers nicht zurückgeworfen werden.

Ein wesentlicher Nachteil bekannter, beispielsweise in die Lichtscheibe einer Fahrzeugleuchte integrierter Rückstrahler ist daher die mit ihrer Anwesenheit einhergehende Beschränkung der für die von der Fahrzeugleuchte zu erfüllenden Lichtfunktionen zur Verfügung stehenden Lichtdurchtrittsfläche durch die Lichtscheibe. Dies sei besonders erwähnt, da länderspezifisch für bestimmte Lichtfunktionen zusätzlich zu den voranstehenden Ausführungen Mindestleuchtflächenanforderungen gelten. In Verbindung mit von Rückstrahlern eingenommenen Flächen in einer Lichtscheibe führt dies zu einem erhöhten Bauraumbedarf, einhergehend mit entsprechendem Leuchtenvolumen und -gewicht.

Nach dem Stand der Technik ist eine Beseitigung dieses Nachteils nur dadurch lichttechnisch möglich, das Licht beispielsweise für eine Schlusslichtfunktion im oder vor dem Rückstrahler zu erzeugen. Gleichzeitig müssen dieses Licht bereitstellende Lichtquellen für Licht derjenigen Wellenlängen, die vom Rückstrahler zurückgeworfen werden sollen, hochtransparent sein. Anderenfalls könnte der Rückstrahler seine Funktion nicht in ausreichender Güte erfüllen. Langfristig könnten eventuell transparente, organische Leuchtdioden, kurz OLEDs vor einem Rückstrahler eine entsprechende Lösung darstellen. Derzeit sind solche OLEDs jedoch noch nicht für den automobilen Einsatz mit seinen hohen Temperaturschwankungen und der stetigen Aussetzung von Umwelteinflüssen verfügbar und vermutlich auch noch nicht ausreichend transparent.

Bereits Stand der Technik sind hingegen Schlusslichter, bei denen die Lichtscheibe oder eine Optikscheibe nur bereichsweise rückstrahlende Elemente besitzt. Das Schlusslicht besteht dann beispielsweise aus abwechselnden Streifen Rückstrahler und Schlusslicht. Ein entsprechend streifiges Erscheinungsbild geht jedoch mit dieser Lösung einher.

Eine weitere ähnliche Alternative ist es ein Schlusslicht und einen Rückstrahler mit gleicher Geometrie direkt übereinander anzuordnen. Dadurch ist die Form des Rückstrahlers gleich der Form des Schlusslichts. Es wird jedoch der doppelte Bauraum in der Leuchte benötigt.

Durch DE 10 2012 007 540 A1 ist ein Reflektor mit einem retroreflektierenden Reflektor bekannt, bei dem geradlinienartige Teilflächen zwischen den reflektierenden Flächen des retroreflektierenden Reflektors für eine durch ein Leuchtmittel zu verwirklichende und zur Teilnahme eines Fahrzeugs am Straßenverkehr vorgeschriebene Lichtfunktion freigehalten sind.

Durch DE 10 2009 058 458 A1 ist eine Seitenmarkierungsleuchte bekannt, die einen retroreflektierenden Reflektor und dahinter angeordnete Lichtquellen aufweist, die ihr Licht zur Erfüllung einer Seitenlichtfunktion in den Halbraum richten, aus dessen Richtung angestrahlt der retroreflektierende Reflektor Licht zurückwirft.

Durch EP 3 355 664 A1 sind ein Leuchtmittel und eine insbesondere als eine Fahrzeugleuchte ausgestaltete Leuchte vorbekannt. Das Leuchtmittel weist eine Anregungslichtquelle und ein fluoreszierendes Element auf. Das fluoreszierende Element ist durch wenigstens eine Lichtfarbe des von der Anregungslichtquelle innerhalb des sichtbaren Bereichs abgestrahlten Lichts zur Abgabe von ebenfalls innerhalb des sichtbaren Bereichs liegendem Licht anregbar. Das fluoreszierende Element weist mindestens eine während einer Anregung zur Abgabe von Licht leuchtende Leuchtfläche auf, durch welche das vom fluoreszierenden Element während einer Anregung zur Abgabe von Licht abgegebene Licht zumindest teilweise austritt. Die Fahrzeugleuchte weist einen von einem Leuchtengehäuse und einer wenigstens für Licht im sichtbaren Bereich transparenten Lichtscheibe zumindest zum Teil umschlossenen Leuchteninnenraum auf. In dem Leuchteninnenraum ist mindestens ein voranstehend beschriebenes Leuchtmittel zur Erfüllung wenigstens einer Lichtfunktion der Leuchte zumindest zum Teil beherbergt.

Zusammengefasst wird nach dem Stand der Technik für Rückstrahler entweder zusätzlich Bauraum in der beispielsweise als Heckleuchte ausgeführten Fahrzeugleuchte benötigt oder es sind zusätzliche Anbauteile erforderlich, was zusätzliche Kosten verursacht.

Wenn ein Rückstrahler dagegen ohne zusätzlichen Bauraumbedarf beispielsweise mit einer Schlusslichtfunktion ineinandergebaut werden könnte, würde dies zwei separate Rückstrahlerbauteile und damit Kosten sparen. Sofern Nebelschlusslichtfunktion oder Rückfahrlichtfunktion separat von den anderen Lichtfunktionen am Fahrzeug platziert werden sollen, ist dies ohne die Rückstrahler in einem einzelnen, beispielsweise mittig in der Fahrzeuglängsachse platzierten Bauteil möglich, weil gesetzlich kein beidseitiger Anbau vorgeschrieben ist. Somit werden auch hier Kosten für ein zusätzliches Anbauteil eingespart.

Rückstrahler können bis dato jedoch nicht mit Lichtfunktionen kombiniert werden. Sie benötigen daher bislang einen eigenen Einbauraum entweder innerhalb einer Fahrzeugleuchte, oder getrennt hiervon am Fahrzeug.

Hierdurch ergibt sich bislang ein zusätzlicher Bauraumbedarf, der nicht für eine Lichtfunktion zur Verfügung steht.

Durch EP 2 979 924 A1 sind zwei Leuchtmittel bekannt. Bei einem ersten Leuchtmittel handelt es sich um ein Leuchtmittel mit einem Rückstrahler. Der Rückstrahler umfasst einen Rückstrahlerkörper aus transparentem Kunststoff. Der Rückstrahlerkörper ist entfernt von seiner zurückzustrahlendem Licht zugewandten Seite mit einer Rückstrahlergeometrie versehen. Die Rückstrahlergeometrie kehrt in den Rückstrahlerkörper aus wenigstens einer Richtung eintretendes, zurückzustrahlendes Licht um und veranlasst es zum Verlassen in einer seinem Eintritt entgegengesetzten Richtung. Darüber hinaus ist in den transparenten Kunststoff des Rückstrahlerkörpers ein Lumeneszenzmaterial eingebracht, welches durch Bestrahlung mit Licht aus der Umgebung, beispielsweise Scheinwerferlicht eines herannahenden, fremden Fahrzeugs, Lumeneszenzlicht wieder durch den Rückstrahlerkörper hindurch zurück in die Umgebung abstrahlt. Bei dem zweiten Leuchtmittel handelt es sich um ein Leuchtmittel mit einer Anregungslichtquelle und einem lumeneszierenden Element, in welches Fluoreszenzmaterial eingebracht ist, welches durch Bestrahlung mit von der Anregungslichtquelle abgestrahltem Anregungslicht Lumeneszenzlicht einer für eine Lichtfunktion vorgesehenen Lumeneszenzlichtfarbe abstrahlt.

Durch DE 20 2018 105 831 U1 ist ein Leuchtmittel mit einer Anregungslichtquelle und mit einem Rückstrahler bekannt. Der Rückstrahler umfasst einen Rückstrahlerkörper aus transparentem Kunststoff. Der Rückstrahlerkörper ist entfernt von seiner zurückzustrahlendem Licht zugewandten Seite mit einer reflektierenden Schicht versehen, welche in den Rückstrahlerkörper aus wenigstens einer Richtung eintretendes, zurückzustrahlendes Licht umkehrt und zum Verlassen in einer seinem Eintritt entgegengesetzten Richtung veranlasst. Die Anregungslichtquelle strahlt das von ihr abgegebene Anregungslicht wenigstens zum Teil in Richtung des Rückstrahlerkörpers ab. Zwischen der zurückzustrahlendem Licht abgewandten Seite des Rückstrahlerkörpers und der reflektierenden Schicht ist eine Schicht aus einem Phosphoreszenzmaterial aufgebracht, welche durch Bestrahlung mit von der Anregungslichtquelle abgestrahltem Anregungslicht Phosphoreszenzlicht einer für eine Lichtfunktion vorgesehenen Phosphoreszenzlichtfarbe abstrahlt.

Durch DE 10 2016 114 246 A1 ist bekannt, eine Optikeinheit oder eine Abdeckscheibe mit Lumineszenzmaterial zu versehen, welches durch Anregungslicht einer unsichtbaren Anregungslichtfarbe zum Abstrahlen von Lumeneszenzicht einer sichtbaren Signalfarbe anregbar ist. Dabei handelt es sich beim Anregungslicht um UV-Licht und bei der Signalfarbe um rotes oder gelbes Licht.

Durch DE 10 2011 081 919 A1 ist bekannt, ein wellenlängenkonvertierendes Material räumlich entfernt von einem lichtemittierenden Element in einem lichtstrahlformenden Element anzuordnen. Hierdurch kann als eine gewünschte Lichtfarbe weißes Licht durch Konversion von vom lichtemittierenden Element abgestrahlten UV-Licht beziehungsweise blauem Licht durch das wellenlängenkonvertierende Material in gelbes Licht sowie additive Farbmischung des gelben Lichts mit dem UV-Licht beziehungsweise dem blauem Licht erhalten werden. Alternativ kann sich hierdurch gelbes, oranges oder rotes Licht durch additive Farbmischung des vom lichtemittierenden Element abgestrahlten UV-Lichts beziehungsweise blauen, violetten oder grünen Lichts mit durch das wellenlängenkonvertierende Material hieraus konvertiertem Licht ergeben.

Eine Aufgabe der Erfindung ist es, ein Leuchtmittel zu schaffen, welches ohne zusätzlichen Bauraumbedarf eine Integration eines Rückstrahlers in eine Lichtfunktion ermöglicht. Ebenfalls eine Aufgabe der Erfindung ist es, eine Fahrzeugleuchte zur Erfüllung mindestens einer Lichtfunktion bereitzustellen, in welche ohne zusätzlichen Bauraumbedarf wenigstens ein Rückstrahler integriert ist.

Die Aufgabe wird jeweils durch die Merkmale der unabhängigen Ansprüche gelöst. Vorteilhafte Ausführungsformen sind in den Ansprüchen, den Zeichnungen sowie in der nachfolgenden Beschreibung, einschließlich der zu den Zeichnungen zugehörigen, wiedergegeben.

Ein erster Gegenstand der Erfindung betrifft demnach ein Leuchtmittel mit einer Anregungslichtquelle und mit einem Rückstrahler.

Erfindungsgemäß umfasst der Rückstrahler einen Rückstrahlerkörper aus transparentem Kunststoff. Der Rückstrahlerkörper ist entfernt von seiner kurz als Vorderseite bezeichneten, zurückzustrahlendem Licht zugewandten Seite, beispielsweise auf seiner kurz als Rückseite bezeichneten, zurückzustrahlendem Licht abgewandten Seite mit einer Rückstrahlergeometrie versehen, welche in den Rückstrahlerkörper aus wenigstens einer Richtung eintretendes, zurückzustrahlendes Licht bevor dieses aus dem Rückstrahlerkörper an der gegenüberliegenden Seite austreten würde umkehrt und zum Verlassen des Rückstrahlerkörpers in einer seinem Eintritt in den Rückstrahlerkörper entgegengesetzten Richtung veranlasst.

Hierdurch muss von dem Rückstrahlerkörper zurückzustrahlendes Licht den Rückstrahlerkörper zumindest teilweise durchwandern.

Die Anregungslichtquelle strahlt das von ihr abgegebene Anregungslicht wenigstens zum Teil in den Rückstrahlerkörper ein.

Dies kann beispielsweise verwirklicht sein, indem die Anregungslichtquelle und der Rückstrahlerkörper so platziert sind, dass von der Anregungslichtquelle abgegebenes Anregungslicht den Rückstrahlerkörper trifft. Das Anregungslicht kann hierbei beispielsweise durch ein Optikelement, wie etwa einen Reflektor, in Richtung des Rückstrahlerkörpers gebündelt werden. Alternativ kann die Anregungslichtquelle zumindest zum Teil von dem Rückstrahlerkörper umgeben, beispielsweise von dem Rückstrahlerkörper umspritzt sein. Dies ist vor allem bei anorganischen Leuchtdioden, kurz LEDs, als Anregungslichtquellen denkbar. Eine zusätzliche Möglichkeit ergibt sich durch eine Einstrahlung des Anregungslichts von der Anregungslichtquelle in einen Lichtleiter, welcher das von ihm propagierte Anregungslicht entfernt wieder in den

Rückstrahlerkörper und/oder in Richtung des Rückstrahlerkörpers entlässt.

Erfindungsgemäß ist in den transparenten Kunststoff des Rückstrahlerkörpers ein Fluoreszenzmaterial eingebracht, welches durch Bestrahlung mit von der Anregungslichtquelle abgestrahltem Anregungslicht Fluoreszenzlicht in einer für eine Lichtfunktion vorgesehenen Fluoreszenzlichtfarbe abstrahlt.

In dem als Kunststoffkörper ausgebildeten Rückstrahlerkörper erfolgt diese Abstrahlung des Fluoreszenzlichts vom kurz als Fluoreszenzfarbstoff bezeichneten, in den transparenten Kunststoff des Rückstrahlerkörpers eingebrachten Fluoreszenzmaterial zunächst ungerichtet. Eine Vorzugsrichtung ist durch die rückseitige Rückstrahlergeometrie des Rückstrahlerkörpers vorgegeben, weil von dieser nicht nur das zurückzustrahlende Licht, sondern auch das von dem Fluoreszenzmaterial durch Bestrahlung mit dem von der Anregungslichtquelle abgestrahlten Anregungslicht abgegebene Fluoreszenzlicht umgekehrt wird. Eine weitere Bündelung des ungerichteten, von dem Fluoreszenzmaterial durch Bestrahlung mit dem von der Anregungslichtquelle abgestrahlten Anregungslicht abgegebenen Fluoreszenzlichts kann durch zusätzliche Optikelemente erhalten werden, beispielsweise durch Anordnung des Rückstrahlerkörpers in einem Reflektor.

Vorzugsweise ist die für die Lichtfunktion vorgesehene Fluoreszenzlichtfarbe rot.

Vorzugsweise strahlt die Anregungslichtquelle Anregungslicht blauer Anregungslichtfarbe ab.

Erfindungsgemäß ist in der wenigstens einen Richtung gesehen vor dem als Kunststoffkörper ausgebildeten Rückstrahlerkörper ein Farbfilter angeordnet

Das Farbfilter kann durch ein rot eingefärbte Lichtscheibe oder Lichtscheibenpartie gebildet sein.

Eine rote Lichtscheibe bildet ein Farbfilter für blaues Anregungslicht. Das Anregungslicht kann damit nicht durch das Farbfilter hindurchtreten, wohingegen zur Erfüllung der Lichtfunktion vorgesehenes rotes Fluoreszenzlicht durch das Farbfilter hindurchtritt.

Ein zweiter Gegenstand der Erfindung betrifft eine Fahrzeugleuchte mit einer entsprechenden Kombination eines Rückstrahlers mit einer Lichtfunktion.

Die Fahrzeugleuchte umfasst beispielsweise einen im Wesentlichen von einem Leuchtengehäuse und einer Lichtscheibe umschlossenen Leuchteninnenraum und mindestens ein darin beherbergtes, mindestens eine Lichtquelle umfassendes Leuchtmittel für wenigstens eine Lichtfunktion der Fahrzeugleuchte.

Die Fahrzeugleuchte umfasst zur Erfüllung einer Lichtfunktion mit bevorzugt roter Lichtfarbe ein Leuchtmittel mit einer Anregungslichtquelle und mit einem Rückstrahler.

Erfindungsgemäß umfasst der Rückstrahler einen Rückstrahlerkörper aus transparentem Kunststoff. Der Rückstrahlerkörper ist auf seiner Rückseite mit einer Rückstrahlergeometrie versehen, welche in den Rückstrahlerkörper von einer anderen Seite, als dessen Rückseite aus eintretendes, zurückzustrahlendes Licht bevor dieses aus dem Rückstrahler an der in Bezug auf dessen Eintritt in den Rückstrahlerkörper gegenüberliegenden Rückseite austreten würde umkehrt und zum Verlassen in einer seinem Eintritt in den Rückstrahlerkörper entgegengesetzten Richtung veranlasst.

Hierdurch durchwandert das von dem Rückstrahler zurückzustrahlende Licht den Rückstrahlerkörper zumindest teilweise.

Das von der Anregungslichtquelle abgestrahlte Anregungslicht ist wenigstens zum Teil auf den Rückstrahlerkörper gerichtet.

Dies kann wie bereits zuvor zum Leuchtmittel beschrieben beispielsweise durch eine entsprechende Anordnung von Anregungslichtquelle und Rückstrahlerkörper und/oder durch eine Anordnung der Anregungslichtquelle ganz oder teilweise innerhalb des Rückstrahlerkörpers und/oder durch Leitung des Anregungslichts beispielsweise via eines Lichtleiters und/oder eines Lichtleiterelements von der Anregungslichtquelle zum Rückstrahlerkörper verwirklicht sein.

In den transparenten Kunststoff des Rückstrahlerkörpers ist ein Fluoreszenzmaterial eingebracht, welches durch Bestrahlung mit von der Anregungslichtquelle abgestrahltem Anregungslicht Fluoreszenzlicht einer für die Lichtfunktion vorgesehenen Fluoreszenzlichtfarbe abstrahlt.

Die Abstrahlung des von dem Fluoreszenzmaterial durch Bestrahlung mit von der Anregungslichtquelle abgestrahltem Anregungslicht in dem als Kunststoffkörper ausgebildeten Rückstrahlerkörper zunächst ungerichtet abgegebenen Fluoreszenzlichts wird teilweise durch die Rückstrahlergeometrie des Rückstrahlerkörpers in eine Vorzugsrichtung gerichtet, weil von der Rückstrahlergeometrie nicht nur das zurückzustrahlende Licht, sondern auch das von dem Fluoreszenzmaterial durch Bestrahlung mit dem von der Anregungslichtquelle abgestrahlten Anregungslicht abgegebene Fluoreszenzlicht umgekehrt wird.

Eine weitere Bündelung des ungerichteten, von dem Fluoreszenzmaterial durch Bestrahlung mit dem von der Anregungslichtquelle abgestrahlten Anregungslicht abgegebenen Fluoreszenzlichts kann durch zusätzliche Optikelemente erhalten werden, beispielsweise indem der Rückstrahlerkörper ganz oder teilweise in einem Reflektor angeordnet ist.

Vorzugsweise strahlt die Anregungslichtquelle Anregungslicht blauer Anregungslichtfarbe ab.

Vorteilhaft kann in der Lichtscheibe oder in wenigstens einer Lichtscheibenpartie der Farbfilter angeordnet sein.

Das Farbfilter kann durch ein rot eingefärbte Lichtscheibe oder Lichtscheibenpartie gebildet sein.

Eine rote Lichtscheibe bildet ein Farbfilter für blaues Anregungslicht. Das Anregungslicht kann damit nicht durch das Farbfilter hindurchtreten, wohingegen zur Erfüllung der Lichtfunktion vorgesehenes rotes Fluoreszenzlicht durch das Farbfilter hindurchtritt. Auch vom Rückstrahler zurückzuwerfendes Licht kann das rote Farbfilter passieren, wobei es nach dem Durchtritt durch die rote Lichtscheibe selbst rot erscheint.

Das Leuchtengehäuse bzw. der Leuchteninnenraum der Fahrzeugleuchte kann in mehrere Kammern mit jeweils eigenen Lichtquellen und/oder Leuchtmitteln sowie gegebenenfalls Lichtscheiben unterteilt sein, von denen mehrere Kammern gleiche und/oder jede Kammer eine andere Lichtfunktionen erfüllen kann.

Es ist ersichtlich, dass die Erfindung eine raumsparende Kombination eines Rückstrahlers mit einer Lichtfunktion einer Fahrzeugleuchte, insbesondere einer als Heckleuchte für ein Kraftfahrzeug ausgebildeten Fahrzeugleuchte schafft.

Die Erfindung löst die ihr zu Grunde liegende Aufgabe unter Beseitigung der Nachteile des Standes der Technik durch einen Rückstrahler aus einem Kunststoff, der mit einem Fluoreszenzmaterial versehen ist. Das Fluoreszenzmaterial wird mittels Anregungslicht einer Anregungswellenlänge zur Abgabe von Fluoreszenzlicht in einer einer Fluoreszenzlichtfarbe entsprechenden Abstrahlwellenlänge angeregt.

Der Rückstrahler ist vorteilhaft in einer eigenen Leuchtenkammer angeordnet.

Er ist vorteilhaft entweder rot eingefärbt, oder hinter einer roten Lichtscheibe angeordnet.

In der Leuchtenkammer befindet sich bevorzugt eine Anregungslichtquelle, die blaues Anregungslicht abstrahlt. Das Fluoreszenzmaterial des Rückstrahlers absorbiert das blaue Anregungslicht und strahlt rotes Fluoreszenzlicht ab.

Das rote Fluoreszenzlicht steht als Lichtfarbe für eine Lichtfunktion zur Verfügung.

Damit kann der für den Rückstrahler benötigte Bauraum zur Erfüllung einer roten Lichtfunktion genutzt werden.

Es ist ersichtlich, dass die Erfindung verwirklicht ist durch eine Fahrzeugleuchte mit einem von einer Lichtscheibe und einem Leuchtengehäuse ganz oder teilweise umgebenen Leuchteninnenraum, der eine Leuchtenkammer mit einem Rückstrahler aus einem transparenten Kunststoff beherbergt, wobei ein Fluoreszenzmaterial in den transparenten Kunststoff des Rückstrahlers eingebracht ist, welches durch Bestrahlung mit einem Anregungslicht Fluoreszenzlicht einer für eine Lichtfunktion vorgesehenen Lichtfarbe abstrahlt, und wobei ebenfalls eine Anregungslicht abstrahlende Anregungslichtquelle in der Leuchtenkammer beherbergt ist, und zwischen der Lichtscheibe und der Anregungslichtquelle wenigstens ein Farbfilter angeordnet ist, welches das Anregungslicht am Verlassen des Leuchteninnenraums hindert und das für die Lichtfunktion vorgesehene, von dem Fluoreszenzmaterial abgestrahlte Fluoreszenzlicht durch die Lichtscheibe hindurch passieren lässt.

Der Rückstrahler kann zumindest einen Teil der Lichtscheibe bilden.

Der Rückstrahler kann rot eingefärbt oder hinter einer roten Lichtscheibe angeordnet sein.

Die Erfindung schafft eine Lichtfunktion, insbesondere ein Schlusslicht, die zugleich die Funktion eines Rückstrahlers erfüllt, insbesondere die Funktion eines roten Rückstrahlers.

Ein Rückstrahler wird dazu ganz oder teilweise aus transparentem Kunststoff mit einem rot fluoreszierenden Farbstoff gefertigt. Die dem Betrachter zugewandte Seite des Rückstrahlers oder eine davorliegende Optikscheibe oder Lichtscheibe ist vorteilhaft rottransparent eingefärbt. Für von außen auf den Rückstrahler einfallendes rotes Licht ist der Fluoreszenzfarbstoff transparent, so dass die Funktion des roten Rückstrahlers nicht beeinträchtigt wird.

Beim Blick von außerhalb des Leuchteninnenraums der Fahrzeugleuchte mit entsprechender Kombination eines Rückstrahlers mit einer Lichtfunktion durch deren Lichtscheibe hindurch nicht sichtbar, wird auf der dem Betrachter abgewandten Seite des Rückstrahlers oder zwischen roter Optik-/Lichtscheibe und Rückstrahler eine Anregungslicht vorzugsweise blauer Anregungslichtfarbe abstrahlende Anregungslichtquelle platziert, die den Fluoreszenzfarbstoff im Rückstrahler zur Abstrahlung von bevorzugt rotem Fluoreszenzlicht anregt. Da die Abstrahlrichtung des Fluoreszenzlichts unabhängig von der Richtung des eingestrahlten blauen Lichts ist, leuchtet der Rückstrahler bei aktivierter, Anregungslicht blauer Anregungslichtfarbe abstrahlender Anregungslichtquelle aus allen Richtungen sichtbar rot. Dies gilt insbesondere auch für die Richtungen, in denen der Rückstrahler seine rückstrahlende Funktion besitzt. Die Abstrahlcharakteristik ist näherungsweise lambertsch. Durch Reflektoren kann das abgestrahlte Licht jedoch zusätzlich gerichtet werden.

Ein zusätzlicher Vorteil der Erfindung liegt darin, das Nachtdesign eines abgestellten Fahrzeugs mit ausgeschaltetem Schlusslicht genauso erscheinen zu lassen wie bei eingeschaltetem Schlusslicht. Das unverkennbare Nachtdesign kann damit erstmalig auch auf das ruhende Fahrzeug übertragen werden. Bei dem die Fahrzeuge momentan wenig Wiedererkennungswert bieten.

Eine Umsetzung ist mit geringer Bauraumtiefe möglich und für eine auf Fluoreszenzmaterialien basierende Leuchte sehr effizient. Dies ist unter Anderem dadurch begründet, dass nahezu alles Anregungslicht zu Fluoreszenzlicht umgewandelt wird. Dieses wird wiederum nahezu vollständig genutzt und kann auch noch mit Reflektoren zumindest teilweise gerichtet werden.

Die Fahrzeugleuchte kann einzelne oder eine Kombination der zuvor und/oder nachfolgend in Verbindung mit dem Leuchtmittel beschriebene Merkmale aufweisen, ebenso wie das Leuchtmittel einzelne oder eine Kombination mehrerer zuvor und/oder nachfolgend in Verbindung mit der Fahrzeugleuchte beschriebene Merkmale aufweisen und/oder verwirklichen kann.

Die Fahrzeugleuchte und/oder das Leuchtmittel können alternativ oder zusätzlich einzelne oder eine Kombination mehrerer einleitend in Verbindung mit dem Stand der Technik und/oder in einem oder mehreren der zum Stand der Technik erwähnten Dokumente und/oder in der nachfolgenden Beschreibung zu den in den Zeichnungen dargestellten Ausführungsbeispielen beschriebene Merkmale aufweisen.

Zusätzliche, über die vollständige Lösung der gestellten Aufgabe und/oder über die voran zu den einzelnen Merkmalen genannten Vorteile hinausgehende Vorteile gegenüber dem Stand der Technik sind nachfolgend aufgeführt.

Das Nachtdesign eines momentan passiven, beispielsweise abgestellten und/oder ruhenden, nicht am fließenden Straßenverkehr teilnehmenden und mit einer Fahrzeugleuchte mit einer Kombination eines Rückstrahlers mit einer beispielsweise das Schlusslicht bildenden Lichtfunktion ausgestatteten Fahrzeugs in Form des Rückstrahlers oder bei mehreren Rückstrahlern je Leuchte und/oder mehreren Leuchten der Rückstrahler ist identisch mit dem Nachtdesign während der Teilnahme am fließenden Straßenverkehr im Betrieb in Form beispielsweise des Schlusslichts.

Es können Kosteneinsparungen erzielt werden durch weniger einzelne Bauteile, die am Fahrzeug montiert werden müssen. Hiervon betroffene, verringerte Kosten sind etwa Logistikkosten, Montagekosten, Kosten für die Planung, Konstruktion und Herstellung von Aussparungen in der Fahrzeugaußenhaut, sowie der Kosten für gegebenenfalls weniger benötigte Verkabelungen. Bei Heckleuchten mit integrierter Nebelschlusslichtfunktion, kurz NSL, und Rückfahrscheinwerferlichtfunktion, kurz RFS, können zwei separat von der Heckleuchte angebrachte Reflektoren entfallen. Bei separatem NSL und RFL können diese in einem in einer beispielsweise in der Fahrzeuglängsachse angebrachten Leuchte kombiniert werden. Bisher werden dafür in der Regel zwei Leuchtenteile verbaut, in denen auch die Rückstrahler untergebracht werden.

Während die Rückstrahlerfläche bisher aus Designgründen möglichst klein gehalten wird, kann ein erfindungsgemäßer Rückstrahler die vollständige Schlusslichtapertur nutzen, die sich teilweise über die komplette Breite des Fahrzeughecks erstreckt. Durch die größere Rückstrahlerfläche wird die Sichtbarkeit des Fahrzeugs bei ausgeschaltetem Rücklicht deutlich erhöht. Daraus ergibt sich ein Sicherheitsgewinn im Straßenverkehr.

Verglichen mit den bisherigen Umsetzungsmöglichkeiten für Lichtfunktionen, die auf Fluoreszenzmaterialien beruhen, ist die hier vorgestellte Erfindung sehr viel energieeffizienter, weil das Anregungslicht nahezu vollständig zur Anregung der Fluoreszenz genutzt werden kann und gleichzeitig nahezu alles erzeugte Fluoreszenzlicht aus der Leuchte abgestrahlt werden kann. Zusätzlich ist es auch designtechnisch ansprechend möglich, das abgestrahlte Licht mit Reflektorschalen zu richten und so die Lichtstärke weiter zu erhöhen.

Eine Umsetzung ist mit geringer Bauraumtiefe möglich.

Die Erfindung wird nachfolgend anhand von in der Zeichnung dargestellter Ausführungsbeispiele näher erläutert. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar. Es zeigen in schematischer Darstellung:

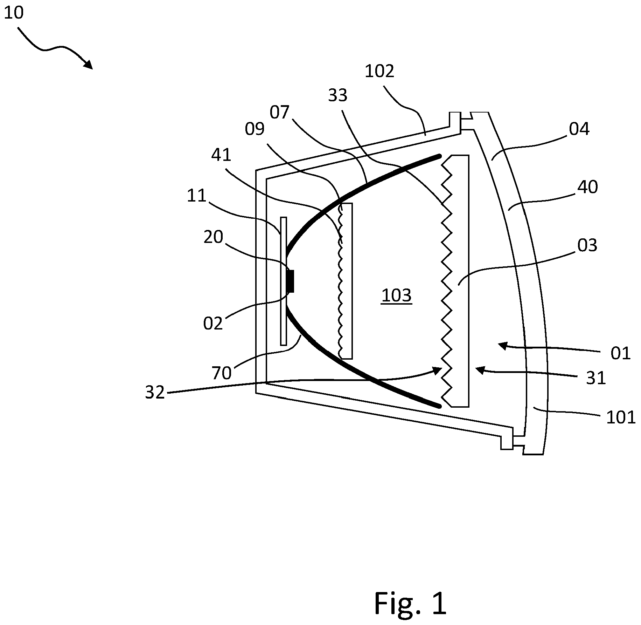

- Fig. 1: ein erstes Ausführungsbeispiel einer Fahrzeugleuchte mit einem Leuchtmittel mit Lichtfunktion-Rückstrahler-Kombination in einer Schnittdarstellung. Aus Sicht des Betrachters befindet sich in dem Leuchtengehäuse hinter einer rot-transparenten äußeren Lichtscheibe ein Rückstrahler. Dieser Rückstrahler besteht aus transparentem Kunststoff, der ein kurz als Fluoreszenzfarbstoff bezeichnetes Fluoreszenzmaterial enthält, welches mit blauem Anregungslicht zur Fluoreszenz angeregt werden kann. Der Fluoreszenzfarbstoff strahlt rotes Fluoreszenzlicht ab. Der Fluoreszenzfarbstoff färbt außerdem durch seine Absorption den Kunststoff ein, dieser behält aber seine Transparenz für rotes Licht. Hinter dem Rückstrahler befinden sich ein Reflektor und eine Optikscheibe zur homogenen Beleuchtung des Rückstrahlers mit dem Anregungslicht einer blau leuchtenden LED als Anregungslichtquelle. Bei aktivierter LED leuchtet der Rückstrahler von außen sichtbar rot. Unabhängig vom Zustand der LED wirkt er stets als Rückstrahler für rotes einfallendes Licht.

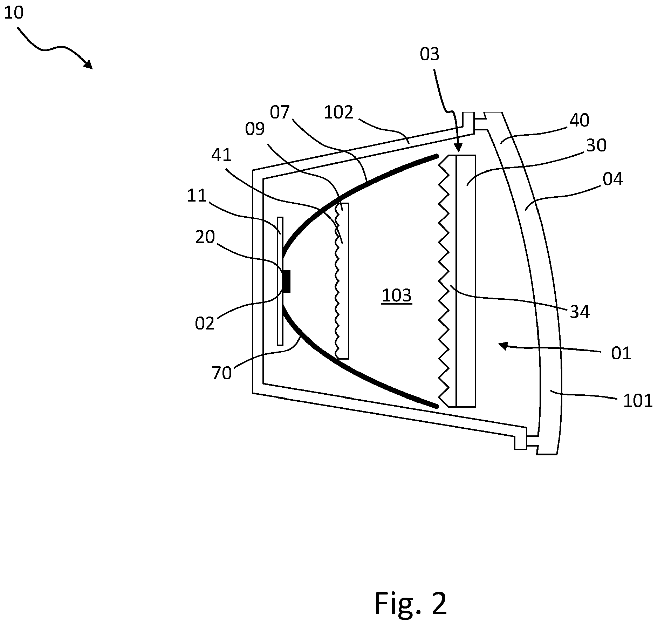

- Fig. 2: ein zweites Ausführungsbeispiel einer Fahrzeugleuchte mit einem Leuchtmittel mit Lichtfunktion-Rückstrahler-Kombination mit einem Rückstrahler aus zwei verschiedenen Materialien in einer Schnittdarstellung. Dieses Ausführungsbeispiel unterscheidet sich von dem in Fig. 1 dargestellten Ausführungsbeispiel dahingehend, dass der Rückstrahler hier aus zwei unterschiedlichen Materialien besteht. Er kann beispielsweise im Mehrtakt-Spritzguss-Verfahren hergestellt werden. Aber auch ein nachträgliches Zusammenfügen beider Teile mit einem optisch transparenten Kleber ist möglich. Dadurch kann beispielsweise ein gegossenes, fluoreszierendes PMMA-Plattenmaterial mit einem Rückstrahler kombiniert werden. Auch um ein homogeneres Erscheinungsbild zu erhalten, kann eine Kombination aus einem klaren Rückstrahler mit einem davorliegenden fluoreszierenden Material wünschenswert sein. Auch die umgekehrte Kombination ist vorstellbar.

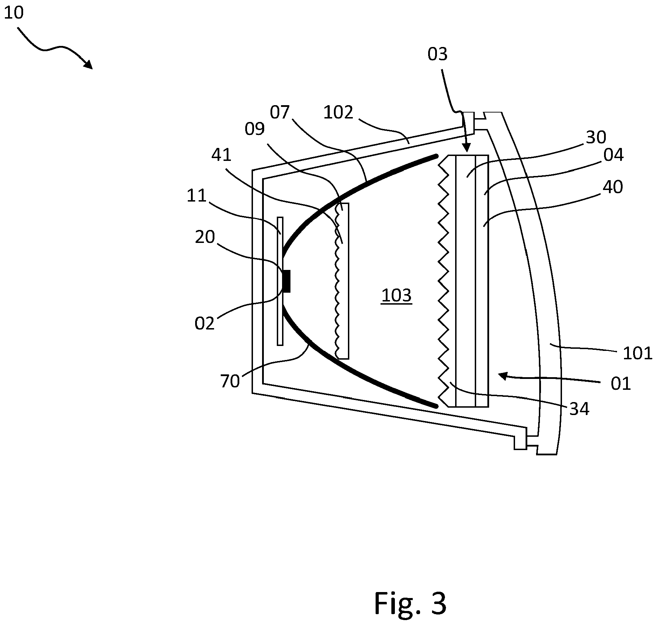

- Fig. 3: ein drittes Ausführungsbeispiel einer Fahrzeugleuchte mit einem Leuchtmittel mit Lichtfunktion-Rückstrahler-Kombination mit einem Rückstrahler aus drei verschiedenen Materialien in einer Schnittdarstellung. Dieses Ausführungsbeispiel unterscheidet sich von dem in Fig. 1 dargestellten Ausführungsbeispiel dahingehend, dass der Rückstrahler hier aus drei unterschiedlichen Materialien besteht. Er kann beispielsweise im Mehrtakt-Spritzguss-Verfahren hergestellt werden. Die beispielsweise eine Prismenstruktur bildende oder eine solche umfassende Rückstrahlergeometrie des Rückstrahlers besteht aus farblostransparentem Material, davor befindet sich eine Schicht aus fluoreszierendem Material. Den Abschluss auf der Betrachterseite bildet ein rot-transparentes Farbfilter, der hier als rot eingefärbter Kunststoff dargestellt ist. Diese Kombination kann beispielsweise hinter einer farblosen Lichtscheibe eingesetzt werden. Wenn wie hier ein absorbierendes Farbfilter eingesetzt wird, sollte das fluoreszierende Material eine Dicke aufweisen, bei der ein Großteil des Anregungslichts bereits bei einem Materialdurchgang im Fluoreszenzmaterial absorbiert wird. Der verbleibende Lichtanteil wird nämlich im Farbfilter absorbiert und ist daher verloren. Ein reflektierendes Farbfilter wäre daher effizienter. Ebenso wird bei einem nicht optisch an den Rückstrahler angekoppeltem Farbfilter ein Teil des transmittierten Anregungslichts durch Totalreflexion an der Reflektorvorderseite zurückgeworfen und kann noch genutzt werden.

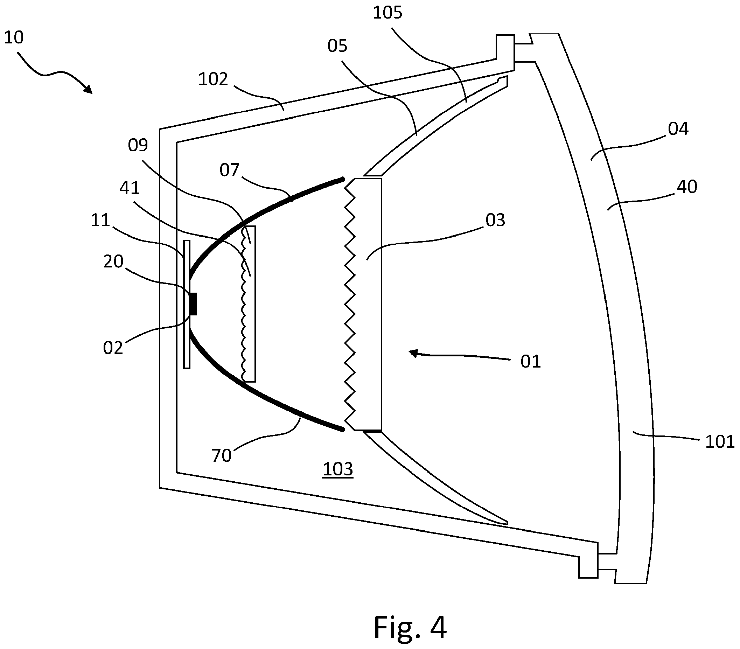

- Fig. 4: ein viertes Ausführungsbeispiel einer Fahrzeugleuchte mit einem Leuchtmittel mit Lichtfunktion-Rückstrahler-Kombination mit einem zusätzlichen Reflektor zum Richten des abgestrahlten Lichts in einer Schnittdarstellung. Dieses Ausführungsbeispiel erweitert das in Fig. 1 dargestellte Beispiel um einen Reflektor neben dem Rückstrahler, der das ausgesandte Fluoreszenzlicht bei aktivierter Lichtfunktion in die gewünschte Richtung lenkt und damit die Lichtstärke in dieser Richtung erhöht.

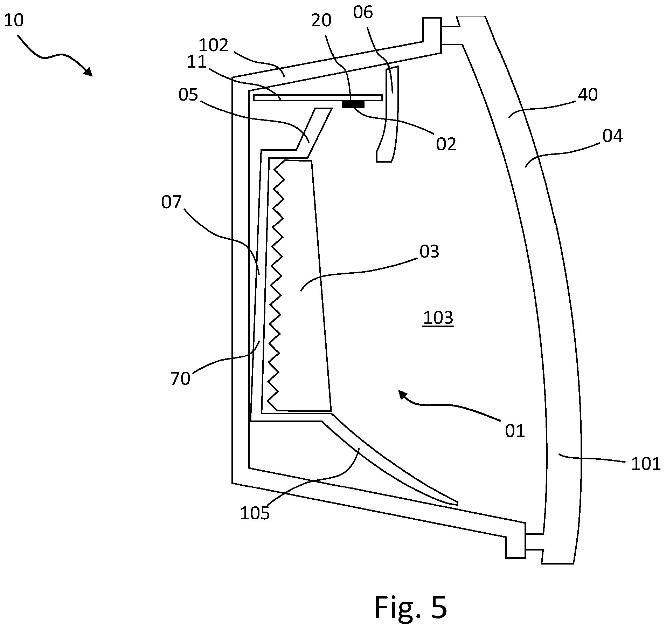

- Fig. 5: ein fünftes Ausführungsbeispiel einer Fahrzeugleuchte mit einem Leuchtmittel mit Lichtfunktion-Rückstrahler-Kombination in einer Schnittdarstellung, bei der das Anregungslicht von vorne auf den Rückstrahler eingestrahlt wird. Eine Blende verhindert den direkten Blick von außen auf die Anregungslichtquelle und lenkt gleichzeitig mehr Anregungslicht auf den fluoreszierenden Rückstrahler. Ein Reflektor richtet das abgestrahlte Fluoreszenzlicht, erstreckt sich jedoch auch hinter den Rückstrahler, um das nach hinten und das seitlich abgestrahlte Licht zu reflektieren und auch evtl. austretendes Anregungslicht wieder in den Reflektor zu lenken. Der Vorteil dieses Aufbaus liegt in einer geringeren Bautiefe als bei dem in Fig. 1 dargestellten Aufbau.

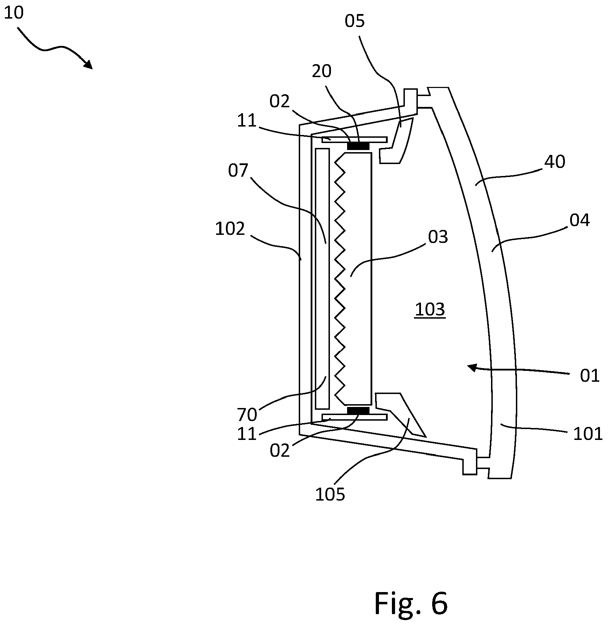

- Fig. 6: ein sechstes Ausführungsbeispiel einer Fahrzeugleuchte mit einem Leuchtmittel mit Lichtfunktion-Rückstrahler-Kombination in einer Schnittdarstellung, bei der das Anregungslicht von der Seite in den Rückstrahler eingekoppelt wird. Eine Blende verhindert den direkten Blick von außen auf die Anregungslichtquelle und lenkt gleichzeitig abgestrahltes Fluoreszenzlicht Richtung Betrachter (rechte Seite in Fig. 6). Ein zusätzlicher Reflektor befindet sich hinter dem Rückstrahler, um das nach hinten abgestrahlte Fluoreszenzlicht zu reflektieren und auch evtl. austretendes Anregungslicht wieder in den Reflektor zu lenken. Der Vorteil dieses Aufbaus liegt in einer sehr geringen Bautiefe. Er eignet sich jedoch nur für Rückstrahler, die ausreichend schmal sind, um das Erscheinungsbild im leuchtenden Zustand noch ausreichend homogen erscheinen zu lassen. Weil das Anregungslicht an den Seitenflächen eingekoppelt wird, leuchtet der Randbereich heller als die Mitte des Rückstrahlers.

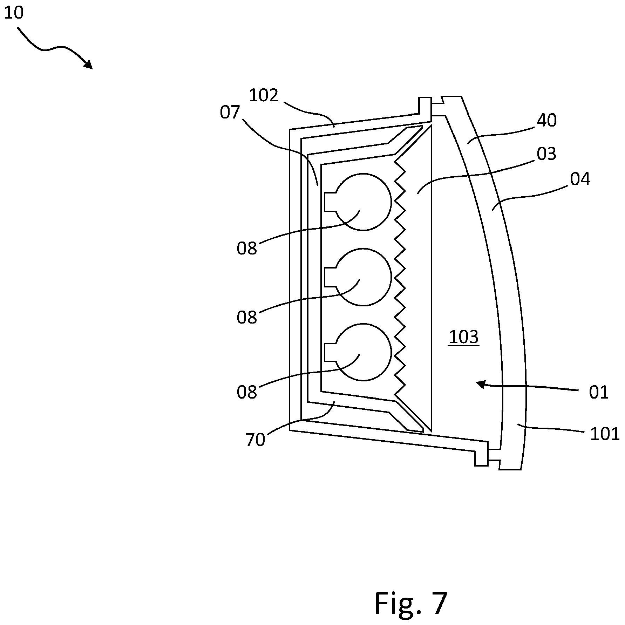

- Fig. 7: ein siebtes Ausführungsbeispiel einer Fahrzeugleuchte mit einem Leuchtmittel mit Lichtfunktion-Rückstrahler-Kombination in einer Schnittdarstellung, mit einer Beleuchtung durch Lichtleiter. Anstelle von Rundlichtleitern, wie in diesem Beispiel dargestellt, kann die Beleuchtung auch mit einem Flachlichtleiter verwirklicht werden. Der Vorteil in der Verwendung von Lichtleitern liegt in einer homogenen Ausleuchtung des Rückstrahlers mit Anregungslicht, bei der gleichzeitig nur eine kleine Elektronikplatine benötigt wird, die sich nicht über die gesamte Länge des Rückstrahlers erstrecken muss. Zusätzlich ist hier mit den abgeschrägten Kanten des Rückstrahlers eine weitere Möglichkeit zur weiteren Erhöhung der Effizienz im leuchtenden Zustand aufgezeigt. Sowohl das Fluoreszenzlicht, das nach hinten aus dem Rückstrahler austritt, als auch das an den Kanten austretende Fluoreszenzlicht wird durch den Reflektor wieder zurückgeworfen und kann Richtung Betrachter (nach rechts in Fig.
- 7): austreten.

Ein in Fig. 1, Fig. 2, Fig. 3, Fig. 4, Fig. 5, Fig. 6, Fig. 7 ganz oder in Teilen dargestelltes Leuchtmittel 01 umfasst:
- mindestens eine Anregungslichtquelle 02, und
- einen Rückstrahler 03.

Der Rückstrahler 03 umfasst einen Rückstrahlerkörper 30 aus transparentem Kunststoff.

Der Rückstrahlerkörper 30 ist entfernt von seiner kurz als Vorderseite 31 bezeichneten, zurückzustrahlendem Licht zugewandten Seite, beispielsweise auf seiner kurz als Rückseite 32 bezeichneten, zurückzustrahlendem Licht abgewandten Seite, mit einer beispielsweise durch eine Rückstrahlerstruktur gebildete oder von einer solchen umfassten Rückstrahlergeometrie 33 versehen.

Die Rückstrahlergeometrie 33 kehrt in den Rückstrahlerkörper 30 aus wenigstens einer Richtung eintretendes, zurückzustrahlendes Licht, bevor dieses aus dem Rückstrahler 03 an der dessen Eintritt in ihn gegenüberliegenden Seite austreten würde, um, und veranlasst es zum Verlassen des Rückstrahlerkörpers 30 in einer seinem Eintritt in den Rückstrahlerkörper 30 entgegengesetzten Richtung.

Das von dem Rückstrahler 03 zurückzustrahlende Licht durchwandert den Rückstrahlerkörper 30 zumindest teilweise bei seinem Weg von seinem Eintritt in den Rückstrahlerkörper 30 über seine Umkehrung an der Rückstrahlergeometrie 33 bis zu seinem Verlassen in einer seinem Eintritt in den Rückstrahlerkörper 30 entgegengesetzten Richtung.

Die Anregungslichtquelle 02 strahlt das von ihr abgegebene Anregungslicht wenigstens zum Teil in den Rückstrahlerkörper 30 ein.

In den transparenten Kunststoff des Rückstrahlerkörpers 30 ist ein Fluoreszenzmaterial eingebracht. Das kurz auch als Fluoreszenzfarbstoff bezeichnete Fluoreszenzmaterial wird durch Bestrahlung mit von der Anregungslichtquelle abgestrahltem Anregungslicht zur Abgabe von Fluoreszenzlicht einer für eine Lichtfunktion vorgesehenen Fluoreszenzlichtfarbe angeregt.

Hiernach strahlt das Fluoreszenzmaterial durch Bestrahlung mit von der Anregungslichtquelle in der Anregungslichtfarbe abgestrahltem Anregungslicht Fluoreszenzlicht einer für eine Lichtfunktion vorgesehenen Fluoreszenzlichtfarbe ab.

Die Anregungslichtquelle 02 kann beispielsweise durch mindestens eine anorganische Leuchtdiode, kurz LED 20, gebildet sein, die Anregungslicht in der Anregungslichtfarbe abstrahlt. LEDs können vorteilhaft auf einem oder mehreren, umgangssprachlich als Platine bezeichneten Leiterbahnträgern 11 angeordnet und hierdurch zugleich sowohl mechanisch fixiert, als auch elektrisch kontaktiert werden.

Vorteilhaft ist die für die Lichtfunktion vorgesehene Fluoreszenzlichtfarbe rot.

Der Rückstrahlerkörper 30 ist hierbei vorteilhaft rot fluoreszierend und für rotes Licht transparent ausgeführt.

Der Rückstrahler 03 kann demnach einen rot fluoreszierenden sowie beispielsweise rot eingefärbten Kunststoffkörper aufweisen.

Eine vorteilhafte Ausgestaltung des Leuchtmittels sieht vor, dass die Anregungslichtquelle 02 Anregungslicht blauer Anregungslichtfarbe abstrahlt.

Das Leuchtmittel 01 kann mindestens ein Farbfilter 04 umfassen.

Beispielsweise kann das Leuchtmittel 01 in der wenigstens einen Richtung gesehen, aus welcher zurückzustrahlendes Licht in den Rückstrahler 03 eintritt, ein vor dem als Kunststoffkörper ausgebildeten Rückstrahlerkörper 30 angeordnetes Farbfilter 40 zumindest für eine der Anregungslichtfarbe entsprechende Wellenlänge des elektromagnetischen Spektrums umfassen.

Hierdurch kann das Leuchtmittel 01 hinter einer farblosen, transparenten Lichtscheibe 101 einer Fahrzeugleuchte 10 angeordnet sein, ohne dass Anregungslicht durch die Lichtscheibe 101 hindurch aus der Fahrzeugleuchte 10 austreten kann.

Eine vorteilhafte Ausgestaltung sieht vor, dass das Farbfilter 04 zumindest für eine der Anregungslichtfarbe entsprechende Wellenlänge des elektromagnetischen Spektrums durch ein rot eingefärbte Lichtscheibe 101 oder Lichtscheibenpartie gebildet oder von einer solchen umfasst ist (Fig. 1, Fig. 2, Fig. 4, Fig. 5, Fig. 6, Fig. 7).

Eine rote Lichtscheibe 101 bildet ein Farbfilter für Anregungslicht blauer Anregungslichtfarbe. Das Anregungslicht kann damit nicht durch das Farbfilter 04 hindurchtreten, wohingegen zur Erfüllung der Lichtfunktion vorgesehenes rotes Fluoreszenzlicht durch das Farbfilter 04 hindurchtritt.

Die Rückstrahlergeometrie 33 kann durch eine Rückstrahlerstruktur gebildet oder von einer solchen umfasst sein. Die Rückstrahlergeometrie 33 kann direkt am Rückstrahlerkörper 30 ausgebildet sein (Fig. 1, Fig. 4, Fig. 5, Fig. 6, Fig. 7), oder sie kann durch einen separaten, beispielsweise aus einem farblosen, transparenten Kunststoff hergestellten Rückstrahlerstrukturkörper 34 gebildet oder von einem solchen umfasst sein (Fig. 2, Fig. 3), der vorteilhaft spaltfrei unmittelbar an die Rückseite 32 des Rückstrahlerkörpers 30 angrenzend angeordnet ist. Denkbar ist beispielsweise eine getrennte Herstellung von Rückstrahlerkörper 30 und Rückstrahlerstrukturkörper 34 und anschließendes miteinander verkleben. Auch eine Herstellung in einem Mehrtakt-Spritzgussverfahren ist möglich.

In dem als Kunststoffkörper ausgebildeten Rückstrahlerkörper 30 erfolgt die Abstrahlung des von dem Fluoreszenzmaterial durch Bestrahlung mit von der Anregungslichtquelle 02 abgestrahltem Anregungslicht abgestrahlten Fluoreszenzlichts einer für eine Lichtfunktion vorgesehenen Fluoreszenzlichtfarbe zunächst ungerichtet. Eine Vorzugsrichtung ist durch die rückseitige Rückstrahlergeometrie 33 vorgegeben, weil von dieser nicht nur das zurückzustrahlende Licht, sondern auch das von dem Fluoreszenzmaterial durch Bestrahlung mit dem von der Anregungslichtquelle 02 abgestrahlten Anregungslicht abgegebene Fluoreszenzlicht umgekehrt wird.

Eine weitere Bündelung des von dem Fluoreszenzmaterial durch Bestrahlung mit dem von der Anregungslichtquelle 02 abgestrahlten Anregungslicht abgegebenen Fluoreszenzlichts kann durch zusätzliche Optikelemente erhalten werden, beispielsweise durch Anordnung des Rückstrahlers 03 in einem Reflektor 05, beispielsweise von einem Reflektor 105 einer Fahrzeugleuchte 10 ganz oder teilweise umgeben (Fig. 4, Fig. 5, Fig. 6).

Hierzu kann der als Kunststoffkörper ausgebildete Rückstrahlerkörper 30 normal zu der wenigstens einen Richtung gesehen, aus welcher der Rückstrahler 03 eintreffendes Licht zurückwirft, ganz oder teilweise von einem Reflektor 05, 105 umgeben sein (Fig. 4, Fig. 5, Fig. 6).

Ein solcher Reflektor 05, 105 kann gleichzeitig als Blende ausgeführt sein, um die Anregungslichtquelle 02 ganz oder teilweise beim Blick von außerhalb einer Fahrzeugleuchte 10 durch deren Lichtscheibe 101 hindurch zu verbergen (Fig. 6).

Alternativ kann eine gesonderte Blende 06 einem solchen Zweck dienen (Fig. 5).

Dieser den Rückstrahlerkörper 30 normal zu der wenigstens einen Richtung, aus welcher eintreffendes Licht die Rückstrahlergeometrie 33 des Rückstrahlers 03 zurückwirft ganz oder teilweise umgebende Reflektor 05, 105 dient beispielsweise der Bündelung des von dem Fluoreszenzmaterial durch Bestrahlung mit dem von der Anregungslichtquelle 02 abgestrahlten Anregungslicht zur Erfüllung und/oder zum Beitrag zu einer Lichtfunktion insbesondere einer mit einem entsprechenden Leuchtmittel 01 mit einer Kombination eines Rückstrahlers mit einer Lichtfunktion ausgestatteten Fahrzeugleuchte abgegebenen Fluoreszenzlichts.

Die zumindest teilweise Einstrahlung des von der Anregungslichtquelle 02 abgestrahlten Anregungslichts in den Rückstrahlerkörper 30 kann beispielsweise verwirklicht sein, indem die Anregungslichtquelle 02 und der Rückstrahlerkörper 30 so platziert sind, dass von der Anregungslichtquelle 02 abgegebenes Anregungslicht den Rückstrahlerkörper 30 trifft (Fig. 1, Fig. 2, Fig. 3, Fig. 4, Fig. 5, Fig. 6). Das Anregungslicht kann hierbei beispielsweise durch ein Optikelement 07, wie etwa einen Reflektor 70, in Richtung des Rückstrahlerkörpers 30 gebündelt werden. Alternativ kann die Anregungslichtquelle 02 zumindest zum Teil von dem Rückstrahlerkörper 30 umgeben, beispielsweise von dem Rückstrahlerkörper 30 umspritzt sein. Dies ist vor allem bei LEDs 20 als Anregungslichtquellen 02 denkbar. Eine alternative oder zusätzliche Möglichkeit ergibt sich durch eine Einstrahlung des Anregungslichts von der Anregungslichtquelle 02 in einen Lichtleiter 08 (Fig. 7), welcher das von ihm propagierte Anregungslicht entfernt wieder in den Rückstrahlerkörper 30 und/oder in Richtung des Rückstrahlerkörpers 30 entlässt.

Demnach kann das Leuchtmittel 01:
- einen Lichtleiter 08 umfassen, welcher das Anregungslicht von der Anregungslichtquelle 02 zum Rückstrahlerkörper 30 leitet, und/oder
- einen Reflektor 07 umfassen, der das Anregungslicht in Richtung des Rückstrahlerkörpers 30 bündelt, und/oder
- eine oder mehrere LEDs 20 als Anregungslichtquelle 02 umfassen, welche ganz oder teilweise von dem als Kunststoffkörper ausgebildeten Rückstrahlerkörper 30 umspritzt sein können.

Zur Bündelung des Anregungslichts auf den Rückstrahlerkörper 30 und/oder zur Unterbringung eines weiteren Farbfilters 41, welches vorteilhaft nur Licht in der das Fluoreszenzmaterial zur Abgabe von Fluoreszenzlicht in einer für eine Lichtfunktion vorgesehenen Fluoreszenzlichtfarbe anregenden Anregungslichtfarbe von der Anregungslichtquelle 02 zum Rückstrahlerkörper 30 passieren lässt, kann eine Optikscheibe 09 zwischen Anregungslichtquelle 02 und Rückstrahlerkörper 30 angeordnet sein. Diese Optikscheibe 09 kann ein erwähntes Farbfilter 41 umfassen und/oder einer erwähnten Bündelung des Anregungslichts auf den Rückstrahlerkörper 30 beitragen.

Wichtig ist an dieser Stelle hervorzuheben, dass ein erwähnter Lichtleiter 08 ein entsprechendes Farbfilter 41 umfassen kann.

Das zuvor beschriebene Leuchtmittel 01 kann in einer ebenfalls in Fig. 1, Fig. 2, Fig. 3, Fig. 4, Fig. 5, Fig. 6, Fig. 7 ganz oder in Teilen dargestellten Fahrzeugleuchte 10 Verwendung finden.

Eine solche Fahrzeugleuchte 10 mit einer Kombination eines Rückstrahlers mit einer Lichtfunktion, umfasst wenigstens ein zuvor beschriebenes Leuchtmittel 01 mit einer Anregungslichtquelle 02 und mit einem Rückstrahler 03 zur Erfüllung und/oder zum Beitrag zu wenigstens einer Lichtfunktion der Fahrzeugleuchte 10.

Die Anregungslichtquelle 02 und der Rückstrahlerkörper 30 des einen Rückstrahler 03 mit einer Lichtfunktion kombinierenden Leuchtmittels 01 sind so angeordnet, dass das von der Anregungslichtquelle 02 abgegebene Anregungslicht wenigstens zum Teil in den Rückstrahlerkörper 30 einstrahlt.

Beispielsweise kann das von der Anregungslichtquelle 02 abgestrahlte Anregungslicht wenigstens zum Teil auf den Rückstrahlerkörper 30 gerichtet sein.

Vorteilhaft ist die Anregungslichtquelle 02 ganz oder teilweise innerhalb des Rückstrahlerkörpers 30 angeordnet.

Alternativ oder zusätzlich kann von der Anregungslichtquelle 02 abgegebenes Anregungslicht via eines Lichtleiters 08 zum Rückstrahlerkörper 30 geführt und in diesen eingestrahlt werden, beispielsweise indem das aus dem Lichtleiter 08 austretende Anregungslicht auf den Rückstrahlerkörper 30 gerichtet aus dem Lichtleiter 08 austritt (Fig. 7).

Der Rückstrahler 03 des Leuchtmittels 01 umfasst den Rückstrahlerkörper 30 aus transparentem Kunststoff, welcher auf seiner Rückseite mit einer Rückstrahlergeometrie 33 versehen ist. Die Rückseite 32 des Rückstrahlers 03 weist zumindest grob gesehen in dieselbe Richtung, wie die Rückseite der Fahrzeugleuchte 10. Die Lichtabgabe der einen oder mehreren Lichtfunktionen der Fahrzeugleuchte 10 findet hingegen hauptsächlich in Richtung deren der Rückseite 32 gegenüberliegender Vorderseite statt, in welche Richtung vorteilhaft auch die Vorderseite 31 des Rückstrahlers 03 weist.

Wichtig ist an dieser Stelle darauf hinzuweisen, dass ein Rückstrahler 03 nicht zwingend in oder entgegen einer Fahrtrichtung angeordnet sein muss. Beispielsweise gibt es auch Vorschriften zur Anordnungen quer zur Fahrtrichtung. Darüber hinaus muss ein innerhalb einer Fahrzeugleuchte 10 angeordneter Rückstrahler 03 auch nicht zwingend mit der Hauptabstrahlrichtung der Fahrzeugleuchte 10 übereinstimmend ausgerichtet sein. Zum Einen, weil er einer Lichtumkehr in einer von der Hauptabstrahlrichtung abweichenden Richtung dienen kann, zum Anderen, weil das von ihm umzukehrende Licht durch Spiegel, Reflektoren oder andere geeignete Optikelemente innerhalb der Fahrzeugleuchte 10 zwischen dem Ein- beziehungsweise Austritt aus derselben und dem Rückstrahler 03 umgelenkt werden kann. Hierdurch kann der Rückstrahler 03 auch außerhalb einer Achslage angeordnet werden. Dennoch weist hierbei seine Vorderseite 31 vorteilhaft in Richtung einer Lichtöffnung an der Vorderseite der Fahrzeugleuchte 10.

Die Rückstrahlergeometrie 33 kehrt in den Rückstrahlerkörper von einer anderen Seite, als dessen Rückseite aus eintretendes, zurückzustrahlendes Licht bevor dieses aus dem Rückstrahler 03 an der in Bezug auf dessen Eintritt in den Rückstrahlerkörper 30 gegenüberliegenden Rückseite 32 austreten würde um und veranlasst es zum Verlassen des Rückstrahlers 03 in einer seinem Eintritt in den Rückstrahlerkörper 30 entgegengesetzten Richtung. Den höchsten Grad an Rückstrahlung weist die Rückstrahlergeometrie 33 vorteilhaft für von der Vorderseite 31 aus in den Rückstrahler 03 eintretendes und nach seiner Umkehrung auch wieder an dieser verlassendes Licht auf.

Wesentlich an dem Rückstrahler 03 des diesen und mindestens eine Anregungslichtquelle 02 umfassenden Leuchtmittels 01 ist, dass das von dem Rückstrahler 03 zurückzustrahlende Licht den Rückstrahlerkörper 30 auf seinem Weg von dessen Eintritt in den Rückstrahlerkörper 30 bis zu der Rückstrahlergeometrie 33 und von dort aus wieder in entgegengesetzter Richtung bis zu seinem Austritt aus dem Rückstrahlerkörper 30 zumindest teilweise durchwandert.

Durch diese Eigenheit, sowie dadurch, dass das von der Anregungslichtquelle 02 abgegebene Anregungslicht wenigstens zum Teil in den Rückstrahlerkörper 30 einstrahlt, und dadurch, dass in den transparenten Kunststoff des Rückstrahlerkörpers 30 ein Fluoreszenzmaterial eingebracht ist, welches durch Bestrahlung mit von der Anregungslichtquelle 02 abgestrahltem Anregungslicht Fluoreszenzlicht einer für die Lichtfunktion vorgesehenen Fluoreszenzlichtfarbe abstrahlt, verwirklicht das Leuchtmittel 01 und die mit ihm ausgestattete Fahrzeugleuchte 10 eine Kombination aus Rückstrahler mit einer Lichtfunktion am Ort des Rückstrahlers, was nach dem Stand der Technik bis dato unmöglich ist.

Das von der Anregungslichtquelle abgegebene Anregungslicht strahlt dabei wenigstens in denjenigen Teil des Rückstrahlerkörpers zumindest zum Teil ein, welcher sich zwischen der Vorderseite 31 des Rückstrahlers und der an dessen Rückseite 32 angeordneten Rückstrahlergeometrie 33 befindet.

Die Abstrahlung des von dem Fluoreszenzmaterial durch Bestrahlung mit von der Anregungslichtquelle 02 abgestrahltem Anregungslicht abgegebenen Lichts wird teilweise durch die Rückstrahlergeometrie 33 des Rückstrahlers 03 in eine Vorzugsrichtung gerichtet, weil von der Rückstrahlergeometrie 33 nicht nur das zurückzustrahlende Licht, sondern auch das von dem Fluoreszenzmaterial durch Bestrahlung mit dem von der Anregungslichtquelle 02 abgestrahlten Anregungslicht abgegebene Fluoreszenzlicht umgekehrt wird.

Eine weitere Bündelung des ungerichteten, von dem Fluoreszenzmaterial durch Bestrahlung mit dem von der Anregungslichtquelle 02 abgestrahlten Anregungslicht abgegebenen Fluoreszenzlichts kann durch zusätzliche Optikelemente, wie etwa einen den Umfang des Rückstrahlers 03 und dessen Rückstrahlerkörper 30 zumindest teilweise umgebenden Reflektor 105 erhalten werden. Beispielsweise kann der weder umzukehrendem, eintreffenden Licht zugewandte, noch die Rückstrahlergeometrie 33 umfassende, Vorderseite 31 und Rückseite 32 des Rückstrahlerkörpers 30 verbindende Umfang des Rückstrahlers 03 ganz oder teilweise von einem Reflektor 05, 105 umgeben sein.

Demnach kann die Fahrzeugleuchte 10 einen Reflektor 105 umfassen, welcher den als Kunststoffkörper ausgebildeten Rückstrahlerkörper 30 des Rückstrahlers 03 des Leuchtmittels 01 normal zu der wenigstens einen Richtung gesehen, aus welcher Richtung eintreffendes Licht der Rückstrahler 03 zurückwirft, ganz oder teilweise umgibt.

Die Fahrzeugleuchte 10 umfasst das Leuchtmittel 01 mit der Anregungslichtquelle 02 und mit dem Rückstrahler 03 vorteilhaft zur Erfüllung einer Lichtfunktion mit roter Lichtfarbe.

Bevorzugt umfasst die Fahrzeugleuchte 10 einen im Wesentlichen von einer Lichtscheibe 101 und einem Leuchtengehäuse 102 umschlossenen Leuchteninnenraum 103, in dem das Leuchtmittel 01 mit der Anregungslichtquelle 02 und mit dem Rückstrahler 03 zumindest zum Teil beherbergt ist.

Vorteilhaft umfasst die Fahrzeugleuchte 10 ein Farbfilter 40, welches Licht in der von der Anregungslichtquelle 02 abgestrahlten Anregungslichtfarbe am Austritt zumindest aus der Vorderseite der Fahrzeugleuchte 10 hindert.

Das Farbfilter 40 kann beispielsweise von einer zwischen der Vorderseite der Fahrzeugleuchte 10 und dem Rückstrahler 03 des Leuchtmittels 01 angeordneten Optikscheibe und/oder von einer die Vorderseite der Fahrzeugleuchte 10 zumindest zum Teil abdeckenden Lichtscheibe 101 und/oder von einer entsprechend einen Teil der Vorderseite der Fahrzeugleuchte 10 abdeckenden Lichtscheibenpartie umfasst sein.

Darüber hinaus kann das Leuchtmittel 01 oder die Fahrzeugleuchte 10 ein zwischen Anregungslichtquelle 02 und Rückstrahler 03 angeordnetes weiteres Farbfilter 41 umfassen, welches nur Licht des der Anregungslichtfarbe entsprechenden Wellenlängenbereichs des elektromagnetischen Spektrums passieren lässt, bei Bestrahlung mit welchem das in den transparenten Kunststoff des Rückstrahlerkörpers 30 eingebrachte Fluoreszenzmaterial Licht einer für die Lichtfunktion vorgesehenen Lichtfarbe abstrahlt.

Beispielsweise kann ein blau-transparentes weiteres Farbfilter 41 in Form einer wellenlängenselektiven Beschichtung einer Optikscheibe 09 zwischen Anregungslichtquelle 02 und Rückstrahler 03 eingefügt sein. Alternativ oder zusätzlich kann vor oder auf den Rückstrahler 03 eine rot-transparente wellenlängenselektive Schicht als Farbfilter 40, 41 aufgebracht sein.

Vorteilhaft strahlt die Anregungslichtquelle 02 Anregungslicht blauer Anregungslichtfarbe ab.

Bevorzugt ist das Leuchtmittel 01 mit der Anregungslichtquelle 02 und mit dem Rückstrahler 03 hinter einer rot eingefärbten Lichtscheibe 101 oder hinter einer rot eingefärbten Lichtscheibenpartie in dem Leuchteninnenraum 103 beherbergt.

Das Farbfilter 40 kann demnach durch ein rot eingefärbte Lichtscheibe 101 oder Lichtscheibenpartie gebildet sein.

Eine rot eingefärbte Lichtscheibe 101 bildet ein Farbfilter für blaues Anregungslicht. Das Anregungslicht kann damit nicht durch das Farbfilter 40 hindurchtreten, wohingegen zur Erfüllung der Lichtfunktion vorgesehenes rotes Fluoreszenzlicht durch das Farbfilter 40 hindurchtritt.

Zusätzlich zu dem eine Kombination eines Rückstrahlers mit einer Lichtfunktion verwirklichenden Leuchtmittel 01 kann die Fahrzeugleuchte 10 ein oder mehrere Leuchtmittel zur Erfüllung derselben und/oder einer oder mehrerer hiervon verschiedenen Lichtfunktionen umfassen.

Umfasst die Fahrzeugleuchte 10 einen im Wesentlichen von einem Leuchtengehäuse 102 und einer Lichtscheibe 101 umschlossenen Leuchteninnenraum 103, so können in dem Leuchteninnenraum 103 hiernach zusätzlich zu dem eine Kombination eines Rückstrahlers mit einer Lichtfunktion verwirklichenden Leuchtmittel 01 ein oder mehrere Leuchtmittel zur Erfüllung der selben, oder einer oder mehrerer verschiedenen Lichtfunktionen beherbergt sein.

Alternativ oder zusätzlich kann das Leuchtengehäuse 102 und/oder der Leuchteninnenraum 103 der Fahrzeugleuchte 10 in mehrere Kammern mit jeweils eigenen Lichtquellen und/oder Leuchtmitteln sowie gegebenenfalls Lichtscheiben 101 und/oder Lichtscheibenpartien unterteilt sein, von denen mehrere Kammern gleiche und/oder jede Kammer eine andere Lichtfunktionen erfüllen kann.

Wenigstens einer Lichtquelle des Leuchtmittels einer Fahrzeugleuchte können ein oder mehrere zur Ausformung einer Lichtverteilung beitragende Optikelemente zur Lichtlenkung zugeordnet sein.

Die Lichtscheibe ist durch eine heutzutage meist aus einem Kunststoff hergestellte, transparente Abdeckung gebildet, welche den Leuchteninnenraum abschließt und die darin beherbergten Bauteile, wie etwa ein oder mehrere Leuchtmittel, Reflektoren sowie alternativ oder zusätzlich vorgesehene Optikelemente gegen Witterungseinflüsse schützt.

Das Leuchtengehäuse bzw. der Leuchteninnenraum kann in mehrere Kammern mit jeweils eigenen Lichtquellen und/oder Leuchtmitteln und/oder Optikelementen sowie gegebenenfalls Lichtscheiben unterteilt sein, von denen mehrere Kammern gleiche und/oder jede Kammer eine andere Lichtfunktionen erfüllen kann.

Bei den erwähnten Optikelementen kann es sich um wenigstens einen Reflektor und/oder um mindestens eine Linse und/oder um eine oder mehrere im Strahlengang zwischen wenigstens einer Lichtquelle des Leuchtmittels und der Lichtscheibe angeordnete Optikscheiben oder dergleichen handeln.

Beispielsweise kann in dem Leuchteninnenraum mindestens ein hinter wenigstens einer Lichtquelle zumindest eines Leuchtmittels angeordneter Reflektor untergebracht sein. Der Reflektor kann zumindest zum Teil durch ein separates Bauteil und/oder durch wenigstens einen Teil des Leuchtengehäuses selbst gebildet sein, beispielsweise vermittels einer zumindest teilweisen, reflektierenden Beschichtung.

Die Lichtscheibe selbst kann alternativ oder zusätzlich als ein Optikelement ausgebildet sein, beispielsweise indem sie vorzugsweise an deren Innenseite mit einer zur Erzeugung einer oder mehrerer zuvor erwähnter Lichtverteilungen beitragenden optischen Struktur versehen ist. Hierdurch kann gegebenenfalls auf eine Optikscheibe verzichtet werden.

Die Erfindung löst die ihr zu Grunde liegende Aufgabe unter Beseitigung der Nachteile des Standes der Technik durch einen Rückstrahler 03 aus einem Kunststoff, der mit einem Fluoreszenzmaterial versehen ist. Das Fluoreszenzmaterial wird mittels Anregungslicht einer Anregungswellenlänge zur Abgabe von Fluoreszenzlicht einer Fluoreszenzwellenlänge angeregt.

Der Rückstrahler 03 ist vorteilhaft in einer eigenen Leuchtenkammer angeordnet.

Er ist vorteilhaft entweder rot eingefärbt und/oder hinter einer rot eingefärbten Lichtscheibe 101 angeordnet.

In der Leuchtenkammer befindet sich bevorzugt eine Anregungslichtquelle 02, die blaues Anregungslicht abstrahlt. Das Fluoreszenzmaterial des Rückstrahlers 03 absorbiert das blaue Anregungslicht und strahlt bevorzugt rotes Fluoreszenzlicht ab.

Das rote Fluoreszenzlicht steht als Lichtfarbe für eine Lichtfunktion der Fahrzeugleuchte zur Verfügung.

Damit kann der für den Rückstrahler 03 benötigte Bauraum zur Erfüllung einer roten Lichtfunktion genutzt werden.

Fig. 1 zeigt den prinzipiellen Aufbau einer erfindungsgemäßen Fahrzeugleuchte 10 mit einem erfindungsgemäßen Leuchtmittel 01 anhand eines ersten Ausführungsbeispiels. In der Fahrzeugleuchte 10 befindet sich ein Rückstrahler 03, der einen Rückstrahlerkörper 30 umfasst, der ganz oder teilweise aus fluoreszierendem Material besteht. Bei dem fluoreszierenden Material handelt es sich bevorzugt um einen transparenten Kunststoff, in den ein auch als Fluoreszenzfarbstoff bezeichnetes Fluoreszenzmaterial eingebracht ist. Das beispielsweise transparenten Kunststoff und diesem beispielsweise beigemengtes Fluoreszenzmaterial umfassende fluoreszierende Material ist transparent für Licht aus demjenigen Wellenlängenbereich des elektromagnetischen Spektrums, in dem der Rückstrahler 03 Licht zurückwerfen soll. Eine aus Blickrichtung des Betrachters hinter (Fig. 1, Fig. 2, Fig. 3, Fig. 4), vor (Fig. 5) oder neben (Fig. 6) dem Rückstrahler angeordnete Anregungslichtquelle 02 erzeugt Anregungslicht in einem Wellenlängenbereich des elektromagnetischen Spektrums, der dazu geeignet ist, das fluoreszierende Material, beispielsweise das in den transparentem Kunststoff des Rückstrahlers 03, kurz in das Rückstrahlermaterial eingebrachte, auch als Fluoreszenzfarbstoff bezeichnete Fluoreszenzmaterial zur Fluoreszenz anzuregen. Bei aktiver Anregungslichtquelle 02 strahlt der Rückstrahler 03 dann Fluoreszenzlicht ab. Die Abstrahlrichtung ist weitgehend unabhängig von der Richtung des eingestrahlten anregenden Anregungslichts.

Fluorophore, wie Fluoreszenzfarbstoffe absorbieren Anregungslicht in einem spezifischen Wellenlängenbereich und strahlen innerhalb kürzester Zeit, meist weniger als einer Mikrosekunde, einen Teil der Energie als langwelligere Strahlung wieder ab. Der Unterschied zur Phosphoreszenz besteht darin, dass die bei der Phosphoreszenz auch als Nachleuchten bezeichnete Lichtabstrahlung bei der Phosphoreszenz deutlich länger nach der Anregung des Materials erfolgt.

Nichtsdestotrotz ist eine Kombination phosphoreszierender Stoffen mit der Erfindung ebenso vorstellbar, wird aber hier als weniger zielführend erachtet.

Die bevorzugt rote Farbe des Rückstrahlers 03 kann insbesondere durch eine farbige Lichtscheibe 101 der Fahrzeugleuchte 10 verwirklicht werden. Im Falle einer Umsetzung, bei der das Fluoreszenzlicht zur Erfüllung oder zum Beitrag einer Schlusslichtfunktion dient, ist dies die rote Lichtscheibe 101 einer als Heckleuchte ausgebildeten Fahrzeugleuchte 10. Alternativ kann ein solches Farbfilter 04, 40 als separate Optikscheibe zwischen Lichtscheibe 101 und Rückstrahler 03 eingefügt werden. Eine weitere Möglichkeit besteht darin, das Farbfilter 04, 40 direkt auf die dem Betrachter zugewandten Seite des Rückstrahlers 03 aufzubringen (Fig. 3).

Neben eingefärbtem Kunststoff, wie etwa PMMA oder PC (Polycarbonat), oder Gläsern, kommen farbige Beschichtungen als Farbfilter 04, 40, 41 in Betracht. Hierzu eignen sich beispielsweise auflaminierte oder aufgeklebte Folien, Lacke oder aufgedampfte Schichten. Generell bieten reflektierende Filter, wie zum Beispiel Interferenzfilter, den Vorteil, dass sie das die Fluoreszenz anregende Anregungslicht reflektieren und so die Lichtstärke im fluoreszierenden Material erhöhen. Dies führt zu einer energieeffizienteren und gleichmäßigeren Ausleuchtung des Rückstrahlers 03 mit Anregungslicht der Anregungswellenlängen. Besonders relevant ist dieser Aspekt, wenn das Farbfilter 04, 40, 41 direkt auf den Reflektor aufgebracht wird (Fig. 3). Dann fehlt die Material-Luft-Grenzfläche zwischen Fluoreszenzmaterial und Farbfilter 04, 40, die sonst durch Fresnel-Reflexion und Totalreflexion einen Teil des Anregungslichts im Material fängt.

Das Farbfilter 04, 40 schützt zusätzlich die fluoreszierenden Elemente im Leuchteninnenraum 103 vor äußerem Licht der Wellenlängen, die die Fluoreszenz anregen. Somit tritt im ausgeschalteten Zustand der Fahrzeugleuchte 10 keine oder nur geringe Fluoreszenz auf. Die ausgeschaltete Fahrzeugleuchte 10 fängt also auch bei heller Umgebung nicht von selbst an zu leuchten. Das Farbfilter 04, 40 schützt das fluoreszierende Element zudem vor der energieintensiven ultravioletter Strahlung der Sonne, was bei Leuchten im Außeneinsatz, wie dies bei Fahrzeugleuchten 10 am Fahrzeug der Regelfall ist, die Lebensdauer erhöhen kann. Selbstverständlich kann der UV-Schutz auch getrennt vom Farbfilter 04, 40 verwirklicht werden.

Die Bestrahlung der fluoreszierenden Elemente kann mit einer oder mehreren Anregungslichtquellen 02 erfolgen. Als Anregungslichtquellen 02 kommen insbesondere LEDs und Glühlampen aber auch Laser, insbesondere Laserdioden, in Betracht. Das von der oder den Anregungslichtquellen 02 abgestrahlte Anregungslicht kann über Optikelemente 07 wie Linsen, beispielsweise als Streuscheiben ausgeführte Optikscheiben 09, Reflektoren 70 gelenkt und homogenisiert werden. Außerdem ist eine Beleuchtung über Lichtleiter 08, auch mit animierbaren Lichtleitern, möglich.

Ein weiteres Farbfilter 41 kann zwischen Anregungslichtquelle 02 und Rückstrahler 03 eingefügt werden, welches Farbfilter 41 das die Fluoreszenz anregende Anregungslicht der Anregungslichtquelle 02 zum Rückstrahler 03 passieren lässt. Damit kann verhindert werden, dass der Betrachter langwelligere Anteile des von der Anregungslichtquelle 02 ausgesandten Anregungslichts direkt sehen kann. Ebenso ist ein Herausfiltern von möglicherweise Materialschädigenden UV-Anteilen des Anregungslichts möglich. Ein solches Farbfilter 41 kann als separates Bauteil, in Form einer Linse oder einer beispielsweise als Streuscheibe ausgeführten Optikscheibe 09 oder in Form eines Reflektors 70 umgesetzt werden. Des Weiteren ist eine Verwirklichung eines solchen Farbfilters 41 als auf der Rückseite 32 des Rückstrahlers 03 angeordnetes Interferenzfilter möglich.

Der Rückstrahler 03 umfasst einen Rückstrahlerkörper 30, der bevorzugt aus im gewünschten Wellenlängenbereich transparenten Kunststoffen besteht, wie etwa PMMA oder PC, die vollständig oder zumindest teilweise mit einem fluoreszierenden Farbstoff eingefärbt sind. Der Rückstrahler 03 kann somit aus einem einheitlichen Material bestehen (Fig. 1, Fig. 4, Fig. 5, Fig. 6, Fig. 7), aus mehreren hintereinanderliegenden unterschiedlichen Schichten (Fig. 2, Fig. 3) oder auch aus nebeneinanderliegenden unterschiedlichen Bereichen. Im letztgenannten Fall kann die Lichtfunktion ein strukturiertes Leuchtbild, wie etwa ein Muster, Linien, Schriftzüge oder dergleichen aufweisen, die im ausgeschalteten Zustand nicht oder kaum wahrnehmbar sind.

Prinzipiell ist ein getrennter Aufbau vorstellbar, bei aus Sicht eines von außerhalb des Leuchteninnenraums 103 durch die Lichtscheibe 101 hindurchblickenden Betrachters ein mit Fluoreszenzfarbstoff eingefärbter, transparenter Rückstrahlerkörper 30 vor einem die Rückstrahlergeometrie 33 umfassenden Rückstrahlerstrukturkörper 34 befindet, ohne an diesen optisch angekoppelt zu sein. Dies hat jedoch den Nachteil, dass ein großer Teil des Fluoreszenzlichts durch Totalreflexion im Material geleitet wird, wie dies in einem Lichtleiter der Fall ist, und an den Objektkanten austritt. Befindet sich die beispielsweise eine Prismenstruktur bildende Rückstrahlergeometrie 33 des Rückstrahlers 03 dagegen im mit Fluoreszenzfarbstoff eingefärbten Material des Rückstrahlerkörpers 30 oder ist optisch an dieses angekoppelt, unterbindet diese Struktur als Streugeometrie die Lichtleitung zu Kantenflächen des Objekts. Der Großteil des erzeugten Fluoreszenzlichts wird dadurch an der Vorderseite 31 oder der Rückseite 32 des Rückstrahlers 03 ausgekoppelt. Mit zusätzlich abgeschrägten Kanten und Reflektoren 70 hinter dem Rückstrahler 03 und um diesen herum kann ein Großteil des erzeugten Fluoreszenzlichts aus der Vorderseite 31 des Rückstrahlers 03 ausgekoppelt und in die gewünschten Betrachtungsrichtungen gelenkt werden (Fig. 5 und Fig. 7).

Der fluoreszierende Farbstoff besitzt mindestens ein Absorptionsmaximum und mindestens ein Emissionsmaximum. Das Emissionsmaximum liegt im sichtbaren Spektralbereich. Das Absorptionsmaximum liegt immer bei kürzeren Wellenlängen als das Emissionsmaximum. Bevorzugt wird ein großer Wellenlängen-Abstand zwischen Absorptionsmaximum und Emissionsmaximum. Dies vereinfacht die Anpassung zwischen Anregungslichtquelle 02, gegebenenfalls vorgesehenem Farbfilter 41 zwischen Anregungslichtquelle 02 und Rückstrahler 03, fluoreszierendem Element und Farbfilter 04, 40 zur Erzeugung der Rückstrahlerfarbe. Die Anregung der Fluoreszenz kann auch außerhalb des Absorptionsmaximums erfolgen, d.h. das Emissionsmaximums der Lichtquelle stimmt nicht mit dem Absorptionsmaximum des fluoreszierenden Farbstoffs überein. So sind beispielsweise blaue LEDs 20 oft kostengünstiger als grüne. Außerdem kann der Abstand zwischen anregender Wellenlänge und emittierter Wellenlänge vergrößert werden, wenn eine LED 20 verwendet wird, deren Emissionsmaximum kurzwelliger ist als das Absorptionsmaximum des Fluoreszenzfarbstoffs.

Bei der Anwendung in einer Signalfunktion in einer Fahrzeugleuchte 10 liegt das Emissionsmaximum des Fluoreszenzfarbstoffs bevorzugt in oder nahe dem gesetzlich vorgeschriebenen Farbbereich für die Signalfunktion. Dies ist rot bei einer Schlusslichtfunktion, Bremslichtfunktion, hinteren Seitenmarkierungslichtfunktion und einer Wiederholblinklichtfunktion zur Fahrtrichtungsanzeige nach SAE. Dies ist gelb bei einer Wiederholblinklichtfunktion zur Fahrtrichtungsanzeige und einer Seitenmarkierungslichtfunktion. Der Farbort des emittieren Fluoreszenzlichts kann durch das Farbfilter 04, 40 zusätzlich beeinflusst werden. Zum Erreichen der gesetzlich vorgeschriebene Farbe des Rückstrahlers 03, welche rot nach hinten, bei seitlichen Rückstrahlern gelb oder rot zur Seite hin ist, ist dieses Farbfilter 04, 40 ohnehin zwingend erforderlich, sofern die Absorption des Fluoreszenzfarbstoffs nicht selbst als Farbfilter 04, 40 ausreicht.

Der Fluoreszenzfarbstoff muss Fluoreszenzlicht aussenden, das mindestens teilweise in dem Wellenlängenbereich liegt, für den das Farbfilter 04, 40 transparent ist. Bei einem roten Rückstrahler 03 ist dies rotes oder orangenes Licht. Der durch das Farbfilter 04, 40 hindurchtretende Teil des Fluoreszenzlichts besitzt im Falle eines roten Rückstrahlers 03 einen Farbort im Rotbereich, vorzugsweise im gesetzlich für Automobilleuchten vorgeschriebenen Rotbereich. Bei einem gelben Rückstrahler kommen grüngelb, gelb, orange und rot fluoreszierende Materialien in Frage.

Je kurzwelliger das abgestrahlte Fluoreszenzlicht ist, desto kurzwelliger wird auch die dominante Wellenlänge nach passieren des Farbfilters 04, 40 sein. Durch die Empfindlichkeitskurve des menschlichen Auges ist bei einem orange fluoreszierendem Farbstoff mit einer höheren Effizienz der Lichterzeugung zu rechnen als bei einem tiefrot fluoreszierenden Farbstoff, obwohl das rote Farbfilter 04, 40 einen Teil des Fluoreszenzlichts blockiert.

Zugleich muss das fluoreszierende Material für Licht der Rückstrahlerfarbe transparent sein. Farbstoffe, die einen großen Wellenlängenabstand zwischen Absorptionsbereich und Emissionsbereich besitzen sind oft teuer. Auch dies spricht eher dafür, bei einem roten Rückstrahler 03 einen orange leuchtenden statt einen tiefrot leuchtenden Fluoreszenzfarbstoff einzusetzen.

Wenn das emittierte Fluoreszenzlicht auch nach passieren des Farbfilters 04, 40 nicht den gesetzlichen Anforderungen entspricht, kann durch eine gezielte Kombination mit weiteren, nicht fluoreszierenden Lichtquellen der Farbort in den gesetzlich zulässigen Bereich verschoben werden. Ebenso kann durch zusätzliche Lichtquellen die Lichtstärke erhöht werden oder das optische Erscheinungsbild ergänzt werden. Darüber hinaus ist es möglich verschiedene Fluoreszenzfarbstoffe als Gemisch oder getrennt voneinander in derselben Leuchte einzusetzen, um eine Farbmischung zu erhalten oder die optische Anmutung zu verändern.

In diesen Fällen trägt das Fluoreszenzlicht zur Erfüllung einer Lichtfunktion bei, wohingegen es eine Lichtfunktion erfüllt, wenn keine zusätzliche Lichtquelle benötigt wird.

Farbstoffe, die im gelben oder roten Spektralbereich Fluoreszenzlicht emittieren, absorbieren meist blaues oder grünes Licht. In als Heckleuchten ausgebildeten Fahrzeugleuchten 10 mit roter oder gelber Lichtscheibe 101 hat dies den Vorteil, dass blaues anstelle von UV-Licht eingesetzt werden kann und so der Leuchteninnenraum 103 nicht energiereicher ultravioletter Strahlung ausgesetzt wird.

Für Rückstrahler 03 an der Fahrzeugfront sind Fluoreszenzfarbstoffe erforderlich, die im Ultravioletten absorbieren und im sichtbaren Spektralbereich transparent erscheinen. Für dekorative Lichtfunktionen, wie etwa eine so genannte Welcome-Funktion, sind dabei beispielsweise auch blau emittierende Farbstoffe interessant. Bevorzugt ist jedoch die Ausgestaltung als roter Rückstrahler 03, gegebenenfalls auch noch als gelber Rückstrahler 03.

Die Erfindung ist nicht durch die Beschreibung anhand der Ausführungsbeispiele beschränkt.

Die Erfindung ist insbesondere im Bereich der Herstellung von Fahrzeugleuchten, insbesondere Kraftfahrzeugleuchten gewerblich anwendbar.

Die Erfindung wurde unter Bezugnahme auf bevorzugte Ausführungsformen beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 01: Leuchtmittel
- 02: Anregungslichtquelle
- 03: Rückstrahler
- 04: Farbfilter
- 05: Reflektor
- 06: Blende
- 07: Optikelement
- 08: Lichtleiter
- 09: Optikscheibe

- 10: Fahrzeugleuchte
- 11: Leiterbahnträger
- 20: LED

- 30: Rückstrahlerkörper
- 31: Vorderseite
- 32: Rückseite
- 33: Rückstrahlergeometrie
- 34: Rückstrahlerstrukturkörper

- 40: Farbfilter (vor Leuchtmittel)
- 41: Farbfilter (zwischen Anregungslichtquelle und Rückstrahlerkörper)

- 70: Reflektor

- 101: Lichtscheibe
- 102: Leuchtengehäuse
- 103: Leuchteninnenraum

- 105: Reflektor

## Patentansprüche

1. Leuchtmittel (01) für eine Fahrzeugleuchte mit einer Anregungslichtquelle (02) und mit einem Rückstrahler (03), wobei der Rückstrahler (03) einen Rückstrahlerkörper (30) austransparentem Kunststoff umfasst, wobei die Anregungslichtquelle (02) das von ihr abgegebene Anregungslicht wenigstens zum Teil in den Rückstrahlerkörper (30) einstrahlt, wobei in den transparenten Kunststoff des Rückstrahlerkörpers (30) ein Fluoreszenzmaterial eingebracht ist, welches durch Bestrahlung mit von der Anregungslichtquelle (02) abgestrahltem Anregungslicht Fluoreszenzlicht einer für eine Lichtfunktion vorgesehenen Fluoreszenzlichtfarbe abstrahlt, **dadurch gekennzeichnet, dass** der Rückstrahlerkörper (30) entfernt von seiner zurückzustrahlendem Licht zugewandten Seite (31) mit einer Rückstrahlergeometrie (33) versehen ist, welche in den Rückstrahlerkörper (30) aus wenigstens einer Richtung eintretendes, zurückzustrahlendes Licht umkehrt und zum Verlassen in einer seinem Eintritt entgegengesetzten Richtung veranlasst, Leuchtmittel (01) in der wenigstens einen Richtung 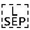 (20) gesehen, aus welcher zurückzustrahlendes Licht in den Rückstrahler (03) eintritt, ein vor dem Rückstrahlerkörper (30) angeordnetes Farbfilter (04, 40) zumindest für eine der Anregungslichtfarbe entsprechende Wellenlänge des elektromagnetischen Spektrums umfasst.

2. Leuchtmittel nach Anspruch 1, wobei die für die Lichtfunktion vorgesehene Fluoreszenzlichtfarbe rot ist.

3. Leuchtmittel nach Anspruch 1 oder 2, wobei die Anregungslichtquelle (02) Anregungslicht blauer Anregungslichtfarbe abstrahlt.

4. Leuchtmittel nach einem der voranstehenden Ansprüche, wobei das Farbfilter (04, 40) durch ein rot eingefärbte Lichtscheibe (101) oder Lichtscheibenpartie gebildet ist.

5. Leuchtmittel nach einem der Ansprüche 1 bis 4, wobei der Rückstrahler (03) normal zu der wenigstens einen Richtung gesehen ganz oder teilweise von einem Reflektor (05) umgeben ist.

6. Leuchtmittel nach einem der voranstehenden Ansprüche, wobei es:
- einen Lichtleiter (08) umfasst, welcher das Anregungslicht von der Anregungslichtquelle (02) zum Rückstrahlerkörper (30) leitet, und/oder
- einen Reflektor (70) umfasst, der das Anregungslicht in Richtung des Rückstrahlerkörpers (30) bündelt, und/oder
- eine oder mehrere LEDs (20) als Anregungslichtquelle (02) umfasst, welche ganz oder teilweise von dem Rückstrahlerkörper (30) umspritzt sind.

7. Fahrzeugleuchte (10) umfassend ein Leuchtmittel (01) mit einer Anregungslichtquelle (02) und mit einem Rückstrahler (03) nach einem der voranstehenden Ansprüche für wenigstens eine Lichtfunktion der Fahrzeugleuchte.

8. Fahrzeugleuchte nach Anspruch 7, wobei sie einen Reflektor (105) umfasst, welcher den Rückstrahler (03) normal zu der wenigstens einen Richtung gesehen, aus welcher Richtung eintreffendes Licht der Rückstrahler (03) zurückwirft, ganz oder teilweise umgibt.

9. Fahrzeugleuchte nach Anspruch 7 oder 8, wobei sie das Leuchtmittel (01) mit der Anregungslichtquelle (02) und mit dem Rückstrahler (03) zur Erfüllung einer Lichtfunktion mit roter Lichtfarbe umfasst.

10. Fahrzeugleuchte nach Anspruch 7, 8 oder 9, wobei sie einen im Wesentlichen von einem Leuchtengehäuse (102) und einer Lichtscheibe (101) umschlossenen Leuchteninnenraum (103) umfasst, in dem das Leuchtmittel (01) mit der Anregungslichtquelle (02) und mit dem Rückstrahler (03) zumindest zum Teil beherbergt ist.

11. Fahrzeugleuchte nach einem der Ansprüche 7 bis 10, wobei der Farbfilter (04, 40) Licht in der von der Anregungslichtquelle (02) abgestrahlten Anregungslichtfarbe am Austritt aus der Fahrzeugleuchte (10) hindert.

12. Fahrzeugleuchte nach einem der Ansprüche 7 bis 11, wobei die Anregungslichtquelle (02) Anregungslicht blauer Anregungslichtfarbe abstrahlt.

13. Fahrzeugleuchte nach Anspruch 12, wobei das Leuchtmittel (01) mit der Anregungslichtquelle (02) und mit dem Rückstrahler (03) hinter einer rot eingefärbten Lichtscheibe (101) oder hinter einer rot eingefärbten Lichtscheibenpartie angeordnet ist.

14. Fahrzeugleuchte nach einem der Ansprüche 7 bis 13, wobei sie zusätzlich zu dem Leuchtmittel (01) ein oder mehrere Leuchtmittel zur Erfüllung der selben und/oder einer oder mehrerer verschiedenen Lichtfunktionen umfasst.

## Claims

1. An illuminant (01) for a vehicle lamp, with an excitation light source (02) and with a retroreflector (03), wherein the retroreflector (03) comprises a retroreflector body (30) of transparent synthetic material, wherein the excitation light source (02) at least partially irradiates the excitation light emitted by the excitation light source (02) into the retroreflector body (30), wherein a fluorescent material is introduced into the transparent synthetic material of the retroreflector body (30), which fluorescent material, by radiation with excitation light emitted from the excitation light source (02), emits fluorescent light of a fluorescent light colour intended for the light function, **characterised in that** the retroreflector body (30) is provided with a retroreflector geometry (33) distant from the retroreflector body side (31) facing toward the light to be reflected, which retroreflector geometry (33) reverses light to be reflected entering into the retroreflector body (30) from at least one direction, and causes the light to leave in a direction opposite to its entering, and wherein the illuminant (01) comprises a colour filter (04, 40) at least for one electromagnetic spectrum wavelength corresponding to the excitation light colour, the colour filter (04, 40) being disposed in front of the retroreflector body (30) as seen in the at least one direction (20) from which light to be reflected enters into the retroreflector (03).

2. The illuminant according to claim 1, wherein the fluorescent light colour provided for the light function is red.

3. The illuminant according to claim 1 or 2, wherein the excitation light source (02) emits excitation light of blue excitation light colour.

4. The illuminant according to one of the previous claims, wherein the colour filter (04, 40) is formed by a red-coloured light lens (101) or light lens section.

5. The illuminant according to one of the claims 1 to 4, wherein the retroreflector (03) is completely or partially surrounded by a reflector (05), as seen normal to the at least one direction.

6. The illuminant according to one of the previous claims, wherein the illuminant:
- comprises a light guide (08), which guides the excitation light from the excitation light source (02) to the retroreflector body (30), and/or
- comprises a reflector (70), which focuses the excitation light toward the retroreflector body (30), and/or
- comprises one or more LEDs (20) as excitation light source (02), which LEDs are completely or partially embedded in the injection-moulding of the retroreflector body (30).

7. A vehicle lamp (10), comprising an illuminant (01) with an excitation light source (02) and with a retroreflector (03) according to one of the previous claims for at least one light function of the vehicle lamp.

8. The vehicle lamp according to claim 7, wherein the vehicle lamp comprises a reflector (105), which completely or partially surrounds the retroreflector (03), as seen normal to the at least one direction from which arriving light is reflected by the retroreflector (03).

9. The vehicle lamp according to claim 7 or 8, wherein the vehicle lamp comprises the illuminant (01) with the excitation light source (02) and with the retroreflector (03) for fulfilling a light function with red light colour.

10. The vehicle lamp according to claim 7, 8, or 9, wherein the vehicle lamp comprises a lamp interior (103) that is substantially enclosed by a lamp housing (102) and a light lens (101), in which lamp interior (103) the illuminant (01) with the excitation light source (02) and with the retroreflector (03) is at least partially accommodated.

11. The vehicle lamp according to one of the claims 7 to 10, wherein the colour filter (04, 40) prevents light in the excitation light colour emitted by the excitation light source (02) from exiting from the vehicle lamp (10).

12. The vehicle lamp according to one of the claims 7 to 11, wherein the excitation light source (02) emits excitation light of blue excitation light colour.

13. The vehicle lamp according to claim 12, wherein the illuminant (01) with the excitation light source (02) and with the retroreflector (03) is disposed behind a red-coloured light lens (101) or behind a red-coloured light lens section.

14. The vehicle lamp according to one of the claims 7 to 13, wherein, in addition to comprising the illuminant (01), the vehicle lamp comprises one or more illuminants for fulfilling the same and/or one or more different light functions.

## Revendications

1. Moyen d'éclairage (01) pour un phare de véhicule doté d'une source de lumière d'excitation (02) et d'un catadioptre (03), ledit catadioptre (03) comprenant un corps catadioptrique (30) en matière plastique transparente, ladite source de lumière d'excitation (02) rayonnant la lumière d'excitation qu'elle émet, au moins en partie dans ledit corps catadioptrique (30), un matériau fluorescent étant introduit dans ladite matière plastique transparente du corps catadioptrique (30), lequel matériau fluorescent, par irradiation avec la lumière d'excitation émise par la source de lumière d'excitation (02), émet une lumière fluorescente d'une couleur de lumière fluorescente prévue pour la fonction d'éclairage, **caractérisé en ce que** le corps catadioptrique (30) est, à distance de sa face (31) tournée vers la lumière à refléter, pourvu d'une géométrie de catadioptre (33) qui inverse la lumière entrant dans le corps catadioptrique (30) depuis au moins une direction et devant être réémise, et qui la fait ressortir dans une direction opposée à son entrée, et ledit moyen d'éclairage (01), vu dans ladite au moins une direction (20) dans laquelle la lumière à refléter entre dans le catadioptre (03), comprenant un filtre de couleurs (04, 40) agencé devant le corps catadioptrique (30) au moins pour une longueur d'onde du spectre électromagnétique correspondant à la couleur de la lumière d'excitation.

2. Moyen d'éclairage selon la revendication 1, la couleur de lumière fluorescente prévue pour la fonction d'éclairage étant le rouge.

3. Moyen d'éclairage selon la revendication 1 ou 2, la source de lumière d'excitation (02) rayonnant de la lumière d'excitation de couleur bleue.

4. Moyen d'éclairage selon l'une quelconque des revendications précédentes, le filtre de couleurs (04, 40) étant constitué par un diffuseur teinté en rouge (101) ou une partie de diffuseur teintée en rouge.

5. Moyen d'éclairage selon l'une quelconque des revendications 1 à 4, le catadioptre (03), vu normalement dans ladite au moins une direction, est entouré entièrement ou partiellement par un réflecteur (05).

6. Moyen d'éclairage selon l'une quelconque des revendications précédentes, comprenant :
- un conducteur de lumière (08) qui dirige la lumière d'excitation de la source de lumière d'excitation (02) vers le corps catadioptrique (30), et/ou
- un réflecteur (70), qui fait converger la lumière d'excitation en direction du corps catadioptrique (30), et/ou
- une ou plusieurs DEL (20) comme source de lumière d'excitation (02), qui sont entièrement ou partiellement surmoulées par le corps catadioptrique (30).

7. Phare de véhicule (10) comprenant un moyen d'éclairage (01) doté d'une source de lumière d'excitation (02) et d'un catadioptre (03) selon l'une quelconque des revendications précédentes pour au moins une fonction d'éclairage dudit phare de véhicule.

8. Phare de véhicule selon la revendication 7, comprenant un réflecteur (105) qui, vu normalement dans ladite au moins une direction dont le catadioptre (03) renvoie la lumière entrante, entoure le catadioptre (03) entièrement ou partiellement.

9. Phare de véhicule selon la revendication 7 ou 8, comprenant le moyen d'éclairage (01) doté de la source de lumière d'excitation (02) et du catadioptre (03) pour remplir une fonction d'éclairage de couleur de lumière rouge.

10. Phare de véhicule selon la revendication 7, 8 ou 9, comprenant un espace intérieur de phare (103), entouré sensiblement d'un boîtier de phare (102) et d'un diffuseur (101), dans lequel le moyen d'éclairage (01) est logé au moins partiellement avec la source de lumière d'excitation (02) et avec le catadioptre (03).

11. Phare de véhicule selon l'une quelconque des revendications 7 à 10, le filtre de couleurs (04, 40) empêchant que de la lumière de la couleur de lumière d'excitation rayonnée par la source de lumière d'excitation (02) ne s'échappe du phare de véhicule (10).

12. Moyen d'éclairage selon l'une quelconque des revendications 7 à 11, la source de lumière d'excitation (02) rayonnant de la lumière d'excitation de couleur bleue.

13. Moyen d'éclairage selon la revendication 12, ledit moyen d'éclairage (01) avec la source de lumière d'excitation (02) et avec le catadioptre (03) étant agencé derrière un diffuseur (101) teinté en rouge ou derrière une partie de diffuseur teintée en rouge.

14. Moyen d'éclairage selon l'une quelconque des revendications 7 à 13, comprenant, outre ledit moyen d'éclairage (01), un ou plusieurs moyens d'éclairage pour remplir la même et/ou une ou plusieurs fonctions d'éclairage différentes.
